(19) Europäisches Patentamt
European Patent Office
Office européen des brevets

(11) EP 3 426 729 B1

## (12) EUROPÄISCHE PATENTSCHRIFT

(45) Veröffentlichungstag und Bekanntmachung des Hinweises auf die Patenterteilung:
25.09.2019 Patentblatt 2019/39

(21) Anmeldenummer: 17710491.6

(22) Anmeldetag: 23.02.2017

(51) Int Cl.:
*C08L 91/06* (2006.01)     *B29C 64/40* (2017.01)
*B29C 64/106* (2017.01)     *B33Y 10/00* (2015.01)
*B33Y 70/00* (2015.01)

(86) Internationale Anmeldenummer:
PCT/EP2017/054258

(87) Internationale Veröffentlichungsnummer:
WO 2018/153467 (30.08.2018 Gazette 2018/35)

(54) **GENERATIVES VERFAHREN ZUR HERSTELLUNG VON FORMKÖRPERN MITHILFE EINES STÜTZMATERIALS AUS WACHS**

GENERATIVE METHOD FOR PRODUCING MOLDED BODIES USING A SUPPORT MATERIAL MADE OF WAX

PROCÉDÉ ADDITIF POUR LA FABRICATION DE CORPS FAÇONNÉS AU MOYEN D'UN MATÉRIAU DE SUPPORT EN CIRE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(43) Veröffentlichungstag der Anmeldung:
16.01.2019 Patentblatt 2019/03

(73) Patentinhaber: Wacker Chemie AG
81737 München (DE)

(72) Erfinder: GOTTSCHALK-GAUDIG, Torsten
84561 Mehring (DE)

(74) Vertreter: Bitterlich, Bianca et al
Wacker Chemie AG
Intellectual Property
Hanns-Seidel-Platz 4
81737 München (DE)

(56) Entgegenhaltungen:
WO-A1-2012/116047     WO-A2-2010/132392

• Anonymous: "3D printing with beeswax", 3ders.org , 3. Januar 2014 (2014-01-03), Seiten 1-8, XP002775544, Gefunden im Internet: URL:https://www.3ders.org/articles/2014010 3-3d-printed-beeswax-project.html [gefunden am 2017-11-14]

## Beschreibung

Die Erfindung betrifft ein generatives Verfahren zur Herstellung von dreidimensionalen Formkörpern, wobei der Formkörper schrittweise aufgebaut wird, indem das strukturbildende Material in flüssiger Form ortsspezifisch ausgebracht wird, wobei zusätzlich ein zweites Material aus Wachs als Stützmaterial in Bereiche ausgebracht wird, die frei von dem strukturbildenden Material bleiben sollen und nach der Verfestigung des strukturbildenden Materials entfernt wird.

## Stand der Technik

Generative Fertigungsverfahren stehen für zahlreiche Materialien sowie deren Kombinationen zur Verfügung (z.B. Metalle, Kunststoffe, Keramiken, Gläser).

Für die Herstellung von Formkörpern durch die ortsspezifische Ausbringung eines flüssigen strukturbildenden Materials (sbM) stehen unterschiedliche Verarbeitungsverfahren zur Verfügung.

Im Fall hochviskoser oder pastöser sbM können diese in Form einer Raupe mittels einer Düse ausgebracht und ortsspezifisch abgelegt werden. Das Ausbringen durch die Düse kann beispielsweise durch Druck oder durch einen Extruder erfolgen. Ein typisches Beispiel für dieses Verarbeitungsverfahren ist der 3D-Filament-Druck. Ein weiteres bekanntes Verfahren beruht auf der ballistischen Dosierung kleiner Mengen an sbM in Form von Tröpfchen, die mittels Druckköpfen ortsspezifisch ausgebracht werden. Im Fall von niederviskosen, nicht oder kaum scherverdünnenden Tinten wird das Verfahren Inkjet-Printing genannt, bei höherviskosen, scherverdünnenden Materialen ist die Bezeichnung Jetting gebräuchlich.

Voraussetzung aller generativen Herstellverfahren ist die Darstellung der Geometrie sowie ggf. weiterer Eigenschaften (Farbe, Materialzusammensetzung) des gewünschten Formkörpers in Form eines digitalen 3D-Datensatzes, welcher als virtuelles Modell des Formkörpers verstanden werden kann (A. Gebhardt, Generative Fertigungsverfahren, Carl Hanser Verlag, München 2013). Diese Modellierung erfolgt vorzugsweise mittels diverser 3D-CAD-Konstruktionsverfahren (*computer-aided design*). Als Eingangsdaten für die Erstellung eines 3D-CAD-Modells können auch 3D-Messdaten dienen, wie diese z.B. aus CT-Messungen (Computer Tomographie) oder MRT-Messungen (Magnet Resonanz Tomographie) resultieren. Der 3D-CAD-Datensatz muss nachfolgend durch material-, verfahrens- und anlagenspezifische Daten ergänzt werden, was dadurch erfolgt, dass dieser über eine Schnittstelle (Interface) in einem geeigneten Format (wie z.B. STL-, CLI/SLC-, PLY-, VRML-, AMF-Format) an eine Additive Manufacturing Software übergeben wird. Diese Software erzeugt aus den geometrischen Informationen letztlich virtuelle Einzelschichten (*slicen*), wobei die optimale Orientierung des Bauteils im Bauraum, Stützstrukturen etc. Berücksichtigung erfahren. Der vollständige Datensatz erlaubt dann die direkte Ansteuerung der für die generative Fertigung eingesetzten Maschine (3D-Drucker).

Der Software-Ablauf ist wie folgt:

1. Konstruktion des Bauteils im CAD-Format
2. Export in das STL-Datenformat
3. Aufteilung des 3D-Modells in Schichten parallel zur Druckebene und Generierung des GCode
4. Übertragung des GCode an die Druckersteuerung

Allen generativen Herstellverfahren mit ortsspezifischer Ausbringung des sbM gemein ist die Notwendigkeit von Stützstrukturen in Bereichen von Hohlräumen, Hinter- und Unterschneidungen bzw. Überhängen, da die ortsspezifische Ausbringung der sbM bis zur Aushärtung des sbM immer einer unterstützenden Oberfläche bedarf.

Entsprechende Stützmaterialen (SM) zur Erzeugung von Hilfsstrukturen sind zum Beispiel aus WO 2017/020971 A1 bekannt.

EP 0 833 237 A2 offenbart den Einsatz thermoplastischer Materialien für den 3D-Filamentdruck. Es werden verschiedene Materialien als strukturbildende Druckmaterialien aufgezählt, wie zum Beispiel Wachse, thermoplastische Harze oder Metalle. Der Nachteil von Wachsen beim Einsatz im 3D-Druck, und insbesondere mittels Jetting, sind ein schmales Temperaturfenster für die Verarbeitung und die geringe Formstabilität des geschmolzenen Wachses.

WO 2012/116047 A1 offenbart den Einsatz einer Wachskomponente auf Basis eines ethoxylierten Fettalkohols als Stützmaterial.

US 2005/0053798 A1 offenbart ein Stützmaterial, dass nur geringe Dichteveränderung beim Abkühlen aufweist. Unter den verschiedenen geeigneten Materialien werden Fettsäureester aufgezählt.

US 5,136,515 offenbart den Einsatz von Wachsen im 3D-Druck. Das Wachs kann dabei als strukturbildendes als auch als Stützmaterial verwendet werden, solange diese einen voneinander verschiedenen Schmelzpunkt besitzen.

Im Stand der Technik ist zudem bekannt, dass Bienenwachs als strukturbildendes Material mittels Extruder aufgebracht werden kann (https://www.3ders.org/articles/20140103-3d-printed-beeswax-project.html).

Insgesamt kann festgestellt werden, dass kein im Stand der Technik offenbartes Verfahren geeignet ist, um einfache Hilfsstrukturen für generative Fertigungsverfahren mit ortsspezifischer Ausbringung des sbM herzustellen, die im 3D-Druck eine gute Druckbarkeit aufweisen, d.h. dass sie in einem breiten Temperaturfenster gedruckt werden können und trotzdem eine gute Formstabilität in der Schmelze aufweisen. Darüber hinaus sollten sie sich anschließend wieder auf einfache Weise entfernen lassen.

Aufgabe der vorliegenden Erfindung war es daher, ein generatives (= additives) Verfahren zur Herstellung von dreidimensionalen Formkörpern bereitzustellen, welches erlaubt neben der ortsspezifischen Ausbringung des strukturbildenden Materials (sbM) auch ortspezifische Hilfsstrukturen aus Stützmaterial (SM) in einfacher und kostengünstiger Weise sowohl aufzubauen als auch wieder zu entfernen. Dabei soll das SM schnell seine stützenden Eigenschaften ausbilden, die stützenden Eigenschaften während des Verfahrens beibehalten, und anschließend einfach wieder entfernt werden können, ohne den Formkörper zu beschädigen oder seine Eigenschaften negativ zu beeinflussen. Darüber hinaus, soll das SM ein gute Druckbarkeit aufweisen und in einem ausreichenden Temperaturfenster gedruckt werden können.

Diese Aufgabe wird durch ein Verfahren gemäß dem Anspruch 1 gelöst.

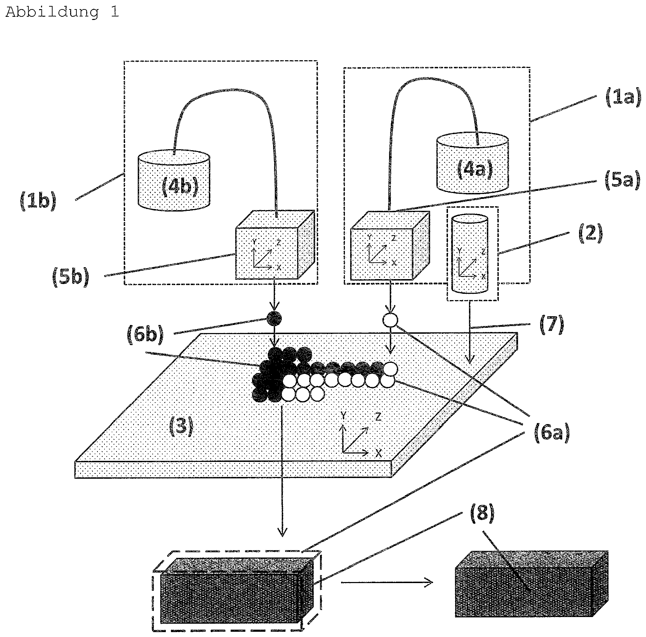

Abbildung 1 zeigt schematisch ein Beispiel wie eine generative Fertigungsanlage aufgebaut sein kann, mit der das erfindungsgemäße Verfahren zur Herstellung von Siliconelastomerteilen (8) mit Hilfsstrukturen (6a) durchgeführt wird. Das strukturviskose viskoelastische SM (6a) befindet sich im Reservoir (4a) eines Einzeldosiersystems (1a), welches mit Druck beaufschlagt ist und über eine Dosierleitung mit einer Dosierdüse (5a) verbunden ist. Dem Reservoir (4a) können Einrichtungen vor- oder nachgeschaltet sein, die es ermöglichen, gelöste Gase durch Evakuieren zu entfernen. Über ein weiteres unabhängig voneinander arbeitendes Einzeldosiersystem (1b) wird das sbM (6b) ausgebracht. Das Einzeldosiersystem (1b) ist ebenfalls ausgestattet mit einem Reservoir (4b), welches über eine Dosierleitung mit einer Dosierdüse (5b) verbunden ist. Auch dem Reservoir (4b) können Einrichtungen vor- oder nachgeschaltet sein, die es ermöglichen, gelöste Gase durch Evakuieren zu entfernen.

Die einzelnen Dosierdüsen (5a) und (5b) können gemeinsam oder vorzugsweise unabhängig voneinander in x-,y- und z-Richtung akkurat positioniert werden, um ein zielgenaues Abscheiden des SM (6a) bzw. des sbM (6b) auf der Basisplatte (3), die vorzugsweise beheizbar ist und vorzugsweise ebenfalls in x-, y- und z-Richtung positioniert werden kann, bzw. im späteren Verlauf der Formteilentstehung auf bereits platziertem SM (6a) und/oder bereits platzierten ggf. bereits vernetztem sbM (6b) zu ermöglichen.

Vorzugsweise kann die Vorrichtung so ausgestaltet werden, dass anstelle oder zusätzlich zu den in x-, y-, z-Richtung positionierbaren Dosierdüsen das Formteil bzw. die Basisplatte (3) in x-, y- und z-Richtung, positioniert werden können. Die Positionierung der Dosierdüsen, des Formteils bzw. der Basisplatte (3) erfolgt dabei vorzugsweise mit einer Genauigkeit von mindestens $\pm$ 100 $\mu$m, besonders bevorzugt von mindestens $\pm$ 25 $\mu$m.

Ferner können eine oder mehrere Strahlungsquellen (2) zur Vernetzung des sbM (6b) vorhanden sein, die vorzugsweise ebenfalls in x-, y- und z-Richtung akkurat positioniert werden können, und mittels Strahlung (7) das sbM (6b) anvernetzen oder ganz vernetzen.

Bevorzugt werden zur Positionierung der Dosierdüsen (5a) und (5b) bzw. der Basisplatte Verfahr-Einheiten mit hoher Wiederholgenauigkeit verwendet. Die zum Positionieren der Dosierdüsen (5a) und (5b) bzw. der Basisplatte verwendete Verfahr-Einheit hat eine Genauigkeit von mindestens $\pm$ 100 $\mu$m, vorzugsweise von mindestens $\pm$ 25 $\mu$m, jeweils in alle drei Raumrichtungen. Die maximale Geschwindigkeit der verwendeten Verfahr-Einheiten bestimmt maßgeblich die Herstellungszeit des Formteils (8) und sollte daher mindestens 0,1 m/s, vorzugsweise mindestens 0,3 m/s, besonders bevorzugt mindestens 0,4 m/s betragen.

Bevorzugt werden Dosierdüsen (5a) und (5b), die ein Jetting flüssiger Medien mittlerer bis hoher Viskosität ermöglichen. Als solche kommen insbesondere (thermische) Bubble-Jet- und Piezo-Druckköpfe in Frage, wobei Piezo-Druckköpfe besonders bevorzugt sind. Letztere ermöglichen das Jetting sowohl niedrigviskoser Materialien, wobei Tropfenvolumen von einigen wenigen Pikolitern (2 pL entsprechen einem Punktedurchmesser von ca. 0,035 $\mu$m) realisiert werden können, als auch mittel- und hochviskoser Materialien wie der SM (6a), wobei Piezo-Druckköpfe mit einem Düsendurchmesser zwischen 50 und 500 $\mu$m bevorzugt werden und Tropfenvolumen im Nanoliter-Bereich (1 bis 100 nL) erzeugt werden können. Mit niedrigviskosen Massen (< 100 mPa·s) können diese Druckköpfe Tröpfchen mit sehr hoher Dosierfrequenz abscheiden (ca. 1 - 30 kHz), während mit höherviskosen Massen (> 100 mPa·s) in Abhängigkeit von den rheologischen Eigenschaften (scherverdünnendes Verhalten) Dosierfrequenzen bis zu ca. 500 Hz erzielt werden können.

Die zeitliche Abfolge des Aufbaus von Hilfsstrukturen (6a) bzw. Zielstrukturen (6b) ist stark abhängig von der gewünschten Geometrie des Formteils (8). So kann es zielführender oder sogar zwingend nötig sein, zuerst zumindest Teile der Hilfsstrukturen (6a) aufzubauen und anschließend die eigentliche Zielstruktur (6b) zu erzeugen. Es kann aber auch möglich sein, beide Strukturen parallel, d. h. ohne zeitlichen Versatz zu erzeugen, d.h. mittels Paralleldosierung aus zwei unabhängigen Dosiereinrichtungen. Unter Umständen ist zuerst der Aufbau von zumindest Teilen der Zielstruktur (6b) sinnvoller und dann ein nachträglicher zumindest teilweiser Aufbau von Stützstrukturen (6a). Gegebenenfalls ist bei einem Bauteil mit komplexer Geometrie der Einsatz aller möglichen Varianten notwendig.

Im Fall des Ausbringens flüssiger, unvernetzter sbM (6b) wie beispielsweise Acrylharze oder Siliconkautschukmassen, müssen diese zur Bildung stabiler Zielstukturen (8) vernetzt werden. Vorzugsweise erfolgt die Vernetzung des Tropfen für Tropfen deponierten sbM (6b) mittels einer oder mehrerer elektromagnetischer Strahlungsquellen (2) (z.B. IR-Laser, IR-Strahler, UV/VIS-Laser, UV-Lampe, LED), die vorzugsweise ebenfalls über eine Verfahrmöglichkeit in x-, y- und z-Richtung verfügen. Die Strahlungsquellen (2) können über Umlenkspiegel, Fokussiereinheiten, Strahlaufweitungssysteme, Scanner, Blenden etc. verfügen. Deponieren und Vernetzen müssen aufeinander abgestimmt werden. Das erfindungsgemäße Verfahren umfasst sämtliche diesbezüglich denkbare Möglichkeiten. Beispielsweise kann es notwendig sein, zunächst einen flächigen Bereich der x,y-Arbeitsebene mit Tropfen der sbM (6b) zu belegen und eine Nivellierung (Ineinanderfließen) abzuwarten, um erst dann diesen Bereich flächig zu bestrahlen und zu vernetzen. Ebenso kann es sinnvoll sein, die aufgebrachte Fläche zwecks Konturierung zunächst nur im Randbereich zu verfestigen und anschließend den Innenbereich durch geeignete Schraffuren anzuvernetzen. Es kann auch notwendig sein, einzelne Tropfen unmittelbar nach deren Platzierung zu vernetzen oder anzuvernetzen, um ein Verlaufen zu verhindern. Es kann zweckmäßig sein, den gesamten Arbeitsbereich während der Formteilbildung permanent zu bestrahlen, um vollständige Vernetzung zu erzielen, oder nur kurzzeitig der Strahlung auszusetzen, um gezielt eine unvollständige Vernetzung (Grünfestigkeit) herbeizuführen, was u.U. mit einer besseren Haftung der Einzelschichten untereinander einhergehen kann. Folglich wird es im Allgemeinen notwendig sein, die das Deponieren und Vernetzen bestimmenden Parameter in Abhängigkeit vom Vernetzungssystem, dem rheologischen Verhalten und den Haftungseigenschaften der sbM (6b) sowie ggf. der übrigen eingesetzten Materialien aufeinander abzustimmen.

Vorzugsweise werden als sbM (6b) flüssige Acrylate, Acrylat-Silicone-Copolymere bzw. deren physikalische Mischungen, acrylfunktionelle Silicone oder reine Siliconkautschukmassen verwendet. Bevorzugt ist die Verwendung von Acrylat-Silicone-Copolymeren bzw. deren physikalischer Mischungen, acrylfunktionellen Siliconen oder reinen Siliconkautschukmassen, besonders bevorzugt von acrylfunktionellen Siliconen oder reine Siliconkautschukmassen und in einer speziellen Ausführung von Siliconkautschukmassen, insbesondere von strahlungsvernetzenden Siliconkautschukmassen. Um eine Verschmutzung der Dosierdüsen zu vermeiden bzw. zu beseitigen, kann die in Abb. 1 gezeigte Anlage durch eine automatisch arbeitende Dosierdüsen-Reinigungsstation ergänzt werden.

Die Einzeldosiersysteme können über eine Temperiereinheit verfügen, um das rheologische Verhalten der Materialien zu konditionieren und/oder die Viskositätserniedrigung durch erhöhte Temperaturen für das Jetting auszunutzen.

Vorzugsweise sind zumindest für die eingesetzte SM (6a) das Einzeldosiersystem (1b), das Reservoir (4b) und ggf. die Dosierleitung mit Temperiereinheiten versehen. Gegebenenfalls kann das Einzeldosiersystem (1a) das SM (6a) auch in Form einer dünnen Raupe, d.h. nach dem Dispensing-Verfahren ausbringen. Insbesondere bei größeren, flächigen Strukturen hat dieses Verfahren Vorteile, z.B. im Hinblick auf die Druckgeschwindigkeit.

Das erfindungsgemäße Verfahren zur Erzeugung von Stützstrukturen (6a) kann mit allen bekannten Verfahren zum additiven Aufbau von Strukturen kombiniert werden, bei denen das strukturbildende Material (sbM) = (6b) in flüssiger Form ortsspezifisch ausgebracht wird. Dazu zählen der Filamentdruck, das Dispensen, Inkjet-Verfahren und das Jetten.

Bevorzugt ist das Dispensen und Jetten von mittel- bis hochviskosen, scherverdünnenden flüssigen sbM (6b), besonders bevorzugt ist das Dispensen und Jetten von additionsvernetzenden Siliconeelastomeren und in einer speziellen Ausführung das Jetten von UV-aktivierten oder strahlenvernetzenden Siliconeelastomeren.

Die gesamte beispielhaft in Abbildung 1 skizzierte Anlage kann auch in einer Vakuumkammer oder Inertgaskammer untergebracht sein, z.B. um UV-C-Strahlungsverluste durch Sauerstoff auszuschließen oder Lufteinschlüsse im Formteil zu vermeiden.

Vorzugsweise kann der Druckraum der Anlage oder die gesamte Anlage in einer Kammer zum Ausschluss von Luftfeuchte untergebracht sein, wobei die Kammer entweder von außen mit Trockenluft gespült werden kann oder die Luft in der Kammer durch Umpumpen durch eine Trockeneinheit, wie beispielsweise eine Trocknungspatrone mit Molsieb oder eine Kondensationseinheit, getrocknet wird.

Vorzugsweise wird der Druckraum oder die gesamte Anlage klimatisiert oder ist in einem klimatisierten Raum oder Gebäude untergebracht. Vorzugsweise erfolgt der Druckvorgang in einem Luft-Temperaturbereich von 0 °C bis 35 °C, besonders bevorzugt von 15 °C bis 25 °C.

Vorzugsweise kann die Temperatur des Bauteils und/oder des Druckraums unabhängig von der Umgebungstemperatur gesteuert werden, um den Verfestigungsvorgang des SM (6a) kontrollieren zu können. Dies kann beispielsweise durch separate Klimatisierung des Druckraumes und/oder Temperierung der Basisplatte und/oder direkte Temperierung des Formteils z.B. mittels temperierter Luftspülung erfolgen.

Vorzugsweise wird die Temperatur des Bauteils auf eine Temperatur unterhalb der Verfestigungstemperatur Ts des SM (6a) eingestellt, besonders bevorzugt in einen Temperaturbereich von 0 °C bis zu einer Temperatur von 10 °C unterhalb der Verfestigungstemperatur Ts des SM (6a).

Vorzugsweise kann die Temperatur des Bauteils direkt bestimmt werden, beispielsweise mittels üblicher Temperaturfühler oder durch kontaktlose Temperaturmessung.

Das im erfindungsgemäßen Verfahren verwendete, bei einer Temperatur oberhalb der Verfestigungstemperatur Ts des SM (6a) strukturviskose, viskoelastische SM (6a) besteht vorzugsweise aus folgenden Komponenten:

> (A) Wachs,
> (B) Partikuläres Rheologieadditiv, und
> (C) optionale weitere Zusatzstoffe

Komponente (A)

Die Komponente A umfasst:
wenigstens ein Wachs umfassend eine Verbindung der Formel (I):

$$R'\text{-COO-R''} \qquad \text{(I)}$$

wobei R' und R'' gleich oder verschieden sein können und aus gesättigten oder ungesättigten gegebenenfalls substituierten aliphatischen Kohlenwasserstoffgruppen mit 10 bis 36 Kohlenstoffatomen ausgewählt sind.

Vorzugsweise besitzt das Wachs einen Schmelzbereich zwischen 40 °C und 80 °C, besonders bevorzugt zwischen 50 °C und 70 °C, insbesondere zwischen 55 °C und 65 °C.

Die Komponente (A) enthält Verbindungen der Formel (I) vorzugsweise in einer Menge von 10 Gew.-% oder mehr, besonders bevorzugt 20 Gew.-% oder mehr und ganz besonders bevorzugt 30 Gew.-% oder mehr, basierend auf dem Gesamtgewicht der Komponente (A).

Vorzugsweise umfasst Komponente (A) ein oder mehrere natürliche Wachse, beispielsweise tierische oder pflanzliche Wachse, wie z.B. Carnaubawachs oder Bienenwachs.

Typischerweise bestehen natürliche Wachse aus Stoffgemischen, welche Ester von Fett- bzw. Wachssäuren und langkettigen, aliphatischen, primären Alkoholen, den so genannten Fett- bzw. Wachsalkoholen umfassen. Darüber hinaus können natürliche Wachse außerdem freie, langkettige, aliphatische Carbonsäuren, Ketone, Alkohole und Kohlenwasserstoffe enthalten.

Vorzugsweise umfasst Komponente (A) Bienenwachs.

Bienenwachs besteht typischerweise aus Myricin, einem Gemisch von Estern langkettiger Alkohole und Säuren, das von Palmitinsäuremyricylester $C_{15}H_{31}\text{-COO-}C_{30}H_{61}$ dominiert wird, daneben kann freie Cerotinsäure $C_{25}H_{51}\text{-COOH}$, Melissinsäure und ähnlichen Säuren, gesättigten Kohlenwasserstoffen, Alkoholen und andere Stoffen (wie beispielsweise bienenartspezifischen Aromastoffen) enthalten sein.

In einer besonders bevorzugten Ausführungsform besteht Komponente (A) ausschließlich aus Bienenwachs.

Bei den eingesetzten Wachsen handelt es sich üblicherweise um kommerzielle Produkte, die beispielsweise von der Fa. Norevo GmbH (Deutschland) vertrieben werden.

Die Schmelzbereiche der Wachse können beispielsweise mittels Dynamischer Differenz Thermoanalyse DSC gemäß DIN EN ISO 11357-3 ermittelt werden: Gerät Netzsch STA449 F5 Jupiter, Probeneinwaage: 13,52 mg, Temperaturbereich 25 °C bis 100 °C, Heiz-/Kühlrate 0,5 K/min, Spülgas $N_2$, gemessen werden zwei Durchläufe (ein Durchlauf besteht aus folgendem Heiz- und Kühlzyklus: von 25 °C (0,5 K/min) bis 100 °C und von 100 °C (0,5 K/min) bis 25 °C); für die Auswertung wird der zweite Lauf verwendet. Üblicherweise treten bei natürlichen Wachsen wie z.B. Bienenwachs mehrere Phasenübergänge auf. Der angegebene Schmelzbereich ist in diesen Fällen der exotherme Übergang mit der höchsten Peaktemperatur.

Komponente (B)

Als partikuläre Rheologieadditive werden vorzugsweise feste, feinteilige anorganische Partikel eingesetzt.

Bevorzugt weisen die partikulären Rheologieadditive eine mittlere Partikelgröße < 1000 nm gemessen mittels Photonen-Korrelationsspektroskopie an geeignet verdünnten wässrigen Lösungen, insbesondere mit einer mittleren Primärteilchen-Partikelgröße von 5 bis 100 nm auf, bestimmt mittels optischer Bildauswertung an TEM-Aufnahmen. Dabei können diese Primärteilchen nicht isoliert existieren, sondern Bestandteile größerer Aggregate und Agglomerate sein.

Bevorzugt sind die partikulären Rheologieadditive anorganische Feststoffe, insbesondere Metalloxide, wobei Kieselsäuren besonders bevorzugt sind. Vorzugsweise weist das Metalloxid eine spezifische Oberfläche von 0,1 bis 1.000 $m^2/g$ (gemessen nach der BET Methode nach DIN 66131 und 66132) auf, besonders bevorzugt von 10 bis 500 $m^2/g$.

Das Metalloxid kann Aggregate (Definition nach DIN 53206) im Bereich von Durchmessern von 100 bis 1.000 nm aufweisen, wobei das Metalloxid aus Aggregaten aufgebaute Agglomerate (Definition nach DIN 53206) aufweist, die in Abhängigkeit von der äußeren Scherbelastung (z.B. bedingt durch die Messbedingungen) Größen von 1 bis 1.000 μm aufweisen kann.

Das Metalloxid ist aus Gründen der technischen Handhabbarkeit vorzugsweise ein Oxid mit kovalentem Bindungsanteil in der Metall-Sauerstoff-Bindung, vorzugsweise ein Oxid im Aggregatszustand Feststoff der Haupt- und Nebengruppenelemente, wie der 3. Hauptgruppe, wie Bor-, Aluminium-, Gallium- oder Indiumoxid, oder der 4. Hauptgruppe wie Siliciumdioxid, Germaniumdioxid, oder Zinnoxid oder -dioxid, Bleioxid oder - dioxid, oder ein Oxid der 4. Nebengruppe, wie Titandioxid, Zirkonoxid, oder Hafniumoxid. Andere Beispiele sind stabile Nickel-, Cobalt-, Eisen-, Mangan-, Chrom- oder Vanadiumoxide.

Besonders bevorzugt sind Aluminium(III)-, Titan(IV)- und Silicium(IV)oxide, wie nasschemisch hergestellte, beispielsweise gefällte Kieselsäuren oder Kieselgele, oder in Prozessen bei erhöhter Temperatur hergestellte Aluminiumoxide, Titandioxide oder Siliciumdioxide, wie zum Beispiel pyrogen hergestellte Aluminiumoxide, Titandioxide oder Siliciumdioxide oder Kieselsäure.

Andere partikuläre Rheologieadditive sind Silikate, Aluminate oder Titanate, oder Aluminiumschichtsilikate, wie Bentonite, wie Montmorillonite, oder Smektite oder Hektorite.

Besonders bevorzugt ist pyrogene Kieselsäure, die in einer Flammenreaktion vorzugsweise aus Siliciumhalogenverbindungen oder Organosiliciumverbindungen, z.B. aus Siliciumtetrachlorid oder Methyldichlorsilan, oder Hydrogentrichlorsilan oder Hydrogenmethyldichlorsilan, oder anderen Methylchlorsilanen oder Alkylchlorsilanen, auch im Gemisch mit Kohlenwasserstoffen, oder beliebigen verflüchtigbaren oder versprühbaren Gemischen aus Organosiliciumverbindungen, wie genannt, und Kohlenwasserstoffen, z.B. in einer Wasserstoff-Sauerstoff-Flamme, oder auch einer Kohlenmonoxid-Sauerstoffflamme, hergestellt wird. Die Herstellung der Kieselsäure kann dabei wahlweise mit und ohne Zusatz von Wasser erfolgen, zum Beispiel im Schritt der Reinigung; bevorzugt ist kein Zusatz von Wasser.

Vorzugsweise weisen die Metalloxide und insbesondere die Kieselsäuren eine fraktale Dimension der Oberfläche $D_S$ von vorzugsweise kleiner oder gleich 2,3 auf, besonders bevorzugt von kleiner oder gleich 2,1, im Besonderen bevorzugt von 1,95 bis 2,05, wobei die fraktale Dimension der Oberfläche $D_S$ definiert ist als: Partikel-Oberfläche A ist proportional zum Partikel-Radius R hoch $D_S$. Die fraktale Dimension der Oberfläche kann mittels Kleinwinkelröntgenbeugung (SAXS) bestimmt werden.

Vorzugsweise weisen die Metalloxide und insbesondere die Kieselsäuren eine fraktale Dimension der Masse $D_m$ von vorzugsweise kleiner oder gleich als 2,8, bevorzugt kleiner oder gleich als 2,7, besonders bevorzugt von 1,8 bis 2,6 auf. Die fraktale Dimension der Masse $D_m$ ist hierbei definiert als: Partikel-Masse M ist proportional zum Partikel-Radius R hoch $D_m$. Die fraktale Dimension der Masse kann mittels Kleinwinkelröntgenbeugung (SAXS) bestimmt werden.

Vorzugsweise handelt es sich bei den partikulären Rheologieadditiven (B) um unpolare, d. h. oberflächenmodifizierte, insbesondere hydrophobierte, vorzugsweise silylierte feinteilige anorganische Partikel.

Bevorzugt sind in diesem Zusammenhang hydrophobe Kieselsäuren, besonders bevorzugt hydrophobe pyrogene Kieselsäuren.

Unter hydrophober Kieselsäure sind in diesem Zusammenhang unpolare Kieselsäuren gemeint, die oberflächlich modifiziert, vorzugsweise silyliert sind, wie sie beispielsweise in den Offenlegungsschriften EP 686676 B1, EP 1433749 A1 oder

DE 102013226494 A1 beschrieben sind. Für die erfindungsgemäß eingesetzten Kieselsäuren bedeutet dies, dass die Kieselsäureoberfläche hydrophobiert, d.h. silyliert ist.

Vorzugsweise sind die eingesetzten hydrophoben Kieselsäuren modifiziert, d. h. silyliert mit Organosiliciumverbindungen, wie z.B.

(i) Organosilane bzw. Organosilazane der Formel (II)

$$R^1_d SiY_{4-d} \qquad (II)$$

und/oder deren Teilhydrolysate,

wobei

R$^1$ gleich oder verschieden sein kann und einen einwertigen, gegebenenfalls substituierten, gegebenenfalls einfach oder mehrfach ungesättigten, gegebenenfalls aromatischen Kohlenwasserstoffrest, mit 1 bis 24 Kohlenstoff-Atomen, der durch Sauerstoffatome unterbrochen sein kann, bedeutet,

d gleich 1, 2 oder 3 bedeutet und

Y gleich oder verschieden sein kann und Halogenatom, einwertige Si-N-gebundene Stickstoffreste, an den ein weiterer Silylrest gebunden sein kann, -OR$^2$ oder -OC(O)OR$^2$ bedeutet, wobei R$^2$ gleich Wasserstoffatom oder ein einwertiger, gegebenenfalls substituierter, gegebenenfalls einfach oder mehrfach ungesättigten Kohlenwasserstoffrest, der durch Sauerstoffatome unterbrochen sein kann, bedeutet,

oder

(ii) lineare, verzweigte oder cyclische Organosiloxane aus Einheiten der Formel (III)

$$R^3_e(OR^4)_fSiO_{(4-e-f)/2} \qquad (III),$$

wobei

R$^3$ gleich oder verschieden sein kann und eine der oben für R$^1$ angegebenen Bedeutungen hat,
R$^4$ gleich oder verschieden sein kann und eine für R$^3$ angegebene Bedeutung hat,
e 0, 1, 2 oder 3 ist,
f 0, 1, 2, 3 ist, mit der Maßgabe dass die Summe e+f $\leq$ 3 ist, und die Anzahl dieser Einheiten pro Molekül mindestens 2 ist, oder

Gemische aus (i) und (ii).

Bei den Organosiliciumverbindungen, die zur Silylierung der Kieselsäuren eingesetzt werden können, kann es sich beispielsweise um Gemische aus Silanen oder Silazanen der Formel (II) handeln, wobei solche aus Methyl-Chlorsilanen einerseits oder Alkoxysilanen und gegebenenfalls Disilazanen andererseits bevorzugt sind.

Beispiele für R$^1$ in Formel (II) sind vorzugsweise der Methyl-, Octyl-, Phenyl- und Vinylrest, besonders bevorzugt sind der Methylrest und der Phenylrest.

Beispiele für R$^2$ sind vorzugsweise der Methyl-, der Ethyl-, der Propyl und der Octylrest, wobei der Methyl- und der Ethylrest bevorzugt sind.

Bevorzugte Beispiele für Organosilane der Formel (II) sind Alkylchlorsilane, wie Methyltrichlorsilan, Dimethyldichlorsilan, Trimethylchlorsilan, Octylmethyldichlorsilan, Octyltrichlorsilan, Octadecylmethyldichlorsilan und Octadecyltrichlorsilan, Methylmethoxysilane, wie Methyltrimethoxysilan, Dimethyldimethoxysilan und Trimethylmethoxysilan, Methylethoxysilane, wie Methyltriethoxysilan, Dimethyldiethoxysilan und Trimethylethoxysilan, Methylacetoxysilane, wie Methyltriacetoxysilan, Dimethyldiacetoxysilan und Trimethylacetoxysilan, Phenylsilane, wie Phenyltrichlorsilan, Phenylmethyldichlorsilan, Phenyldimethylchlorsilan, Phenyltrimethoxysilan, Phenylmethyldimethoxysilan, Phenyldimethylmethoxysilan, Phenyltriethoxysilan, Phenylmethyldiethoxysilan und Phenyldimethylethoxysilan,Vinylsilane, wie Vinyltrichlorsilan, Vinylmethyldichlorsilan, Vinyldimethylchlorsilan, Vinyltrimethoxysilan, Vinylmethyldimethoxysilan, Vinyldimethylmethoxysilan, Vinyltriethoxysilan, Vinylmethyldiethoxysilan und Vinyldimethylethoxysilan, Disilazane wie Hexamethyldisilazan, Divinyltetramethyldisilazan und Bis(3,3-trifluorpropyl)tetramethyldisilazan, Cyclosilazane wie Octamethylcyclotetrasilazan, und Silanole wie Trimethylsilanol.

Besonders bevorzugt ist Methyltrichlorsilan, Dimethyldichlorsilan und Trimethylchlorsilan oder Hexamethyldisilazan.

Bevorzugte Beispiele für Organosiloxane der Formel (III) sind lineare oder cyclische Dialkylsiloxane mit einer mittleren Anzahl an Dialkylsiloxyeinheiten von größer als 3. Die Dialkylsiloxane sind bevorzugt Dimethylsiloxane. Besonders bevorzugt sind lineare Polydimethylsiloxane mit folgenden Endgruppen: Trimethylsiloxy-, Dimethylhydroxysiloxy-, Dimethylchlorsiloxy-, Methyldichlorsiloxy-, Dimethylmethoxysiloxy-, Methyldimethoxysiloxy-, Dimethylethoxysiloxy-, Methyldiethoxysiloxy-, Dimethylacetoxysiloxy-, Methyldiacetoxysiloxy- und Dimethylhydroxysiloxygruppen, insbesondere mit Trimethylsiloxy- oder Dimethylhydroxysiloxyendgruppen.

Bevorzugt haben die genannten Polydimethylsiloxane eine Viskosität bei 25°C von 2 bis 100 mPa·s.

Die eingesetzten hydrophoben Kieselsäuren weisen eine Silanolgruppendichte von vorzugsweise kleiner 1,8 Silanolgruppen pro nm$^2$, bevorzugt von höchstens 1,0 Silanolgruppen pro nm$^2$ und besonders bevorzugt von höchstens 0,9 Silanolgruppen pro nm$^2$ auf.

Überraschenderweise hat sich gezeigt, dass der Einsatz von hydrophoben Kieselsäuren eine schrumpfungsbedingte Ablösung des gedruckten Formkörpers von der Trägerplatte verringert bzw. verhindert.

Die eingesetzten hydrophoben Kieselsäuren weisen einen Kohlenstoffgehalt von vorzugsweise größer oder gleich 0,4 Gew.% Kohlenstoff , bevorzugt 0,5 Gew.% bis 15 Gew.% Kohlenstoff und besonders bevorzugt 0,75 Gew% bis 10 Gew.% Kohlenstoff auf, wobei das Gewicht auf die hydrophobe Kieselsäure bezogen ist.

Gemäß einer bevorzugten Ausführungsform der Erfindung, weisen die eingesetzten hydrophoben Kieselsäuren eine Methanolzahl von vorzugsweise mindestens 30, bevorzugt von mindestens 40 und besonders bevorzugt von mindestens 50 auf.

Die eingesetzten hydrophoben Kieselsäuren weisen vorzugsweise eine DBP-Zahl (Dibutylphthalatzahl) von kleiner 250 g/100 g, bevorzugt 150 g/100g bis 250 g/100g auf.

Die eingesetzten hydrophoben Kieselsäuren weisen vorzugsweise eine Stampfdichte gemessen gemäß DIN EN ISO 787-11 von 20 g/l - 500 g/l, bevorzugt von 30 - 200 g/l auf. Die Silanolgruppendichte wird mittels Säure-Base-Titration bestimmt, wie beispielsweise in G.W. Sears, Anal. Chem. 1956, 28, 1981 offenbart.

Der Kohlenstoffgehalt kann durch Elementaranalyse bestimmt werden.

Die Methanolzahl ist der prozentuale Anteil von Methanol, welcher der Wasserphase zugesetzt werden muss, um vollständige Benetzung der Kieselsäure zu erreichen. Vollständige Benetzung bedeutet dabei ein vollständiges Einsinken der Kieselsäure in der Wasser-Methanol-Testflüssigkeit zu erreichen.

Die analytischen Methoden zur Charakterisierung der Komponente (B) werden zudem weiter unten im Beispielteil genauer ausgeführt.

Vorzugsweise handelt es sich bei den partikulären Rheologieadditiven (B) um polare, d. h. hydrophile, d. h. unmodifizierte, feinteilige anorganische Partikel, bevorzugt hydrophile, unmodifizierte pyrogene Kieselsäuren.

Die unmodifizierten, d. h. hydrophilen, polaren Kieselsäuren weisen vorzugsweise eine spezifische Oberfläche von 0,1 bis 1.000 m$^2$/g (gemessen nach der BET Methode nach DIN 66131 und 66132) auf, besonders bevorzugt von 10 bis 500 m$^2$/g.

Die unmodifizierten, d. h. hydrophilen, polaren Kieselsäuren weisen eine Silanolgruppendichte von vorzugsweise 1,8 Silanolgruppen pro nm$^2$ bis 2,5 Silanolgruppen pro nm$^2$, bevorzugt 1,8 Silanolgruppen pro nm$^2$ bis 2,0 Silanolgruppen pro nm$^2$ auf.

Die unmodifizierten, d. h. hydrophilen, polaren Kieselsäuren weisen eine Methanolzahl von kleiner 30, bevorzugt kleiner 20, besonders bevorzugt kleiner 10 und in einer speziellen Ausführung werden die unmodifizierten, d. h. hydrophilen, polaren Kieselsäuren ohne Zusatz von Methanol vollständig von Wasser benetzt.

Die unmodifizierten, d. h. hydrophilen, polaren Kieselsäuren weisen eine Stampfdichte gemessen gemäß DIN EN ISO 787-11 von 20 g/l - 500 g/l, bevorzugt von 30 - 200 g/l auf und besonders bevorzugt von 30 - 150 g/l auf.

Die eingesetzten unmodifizierten, d. h. hydrophilen, polaren Kieselsäuren weisen vorzugsweise eine DBP-Zahl (Dibutylphthalatzahl) von kleiner 300 g/100 g, bevorzugt 150 g/100 g bis 280 g/100 g auf.

Als partikuläres Rheologieadditiv (B) können beliebige Mischungen feinteiliger anorganischer Partikel eingesetzt werden, insbesondere können Gemische aus verschiedenen Kieselsäuren eingesetzt werden, so z.B. Mischungen aus Kieselsäuren unterschiedlicher BET-Oberfläche, oder Mischungen aus Kieselsäuren mit unterschiedlicher Silylierung oder Mischungen aus unmodifizierten und silylierten Kieselsäuren. Bevorzugt beträgt bei Mischungen aus silylierten, d. h. hydrophoben, unpolaren Kieselsäuren und unmodifizierten, d. h. hydrophilen, polaren Kieselsäuren, der Anteil der hydrophoben Kieselsäuren an der Gesamtkieselsäuremenge mindestens 50 Gewichtsprozent (Gew.-%), bevorzugt mindestens 80 Gew.-% und besonders bevorzugt mindestens 90 Gew.-%.

Weitere Zusatzstoffe (C)

Das erfindungsgemäße SM (6a) kann neben den Komponenten (A) und (B) weitere funktionale Zusatzstoffe enthalten, wie beispielsweise

- Farbmittel, wie organische oder anorganische Farbpigmente oder molekular lösliche Farbstoffe;
- industriell übliche Lösungsmittel, wie Wasser, Aceton, Alkohole, aromatische oder aliphatische Kohlenwasserstoffe;
- Stabilisatoren, wie Hitze- oder UV-Stabilisatoren;
- UV-Tracer, wie Fluoreszenz-Farbstoffe, wie z.B. Rhodamine, Fluoresceine oder andere zum Nachweis von SM-Restspuren auf Bauteilen;
- Polymere, wie polymere Rheologieadditive oder Verlaufshilfsmittel;
- Füllstoffe, wie nichtverstärkende Füllstoffe, wie zum Beispiel Füllstoffe mit einer BET-Oberfläche von bis zu 50 m$^2$/g, wie Quarz, Diatomenerde, Calciumsilikat, Zirkoniumsilikat, Zeolithe, Aluminiumoxid, Titanoxid, Eisenoxid, Zinkoxid, Bariumsulfat, Calciumcarbonat, Gips, Siliciumnitrid, Siliciumcarbid, Schichtsilikate, wie Glimmer, Montmorillionite, Bornitrid, Glas- und Kunststoffpulver;
- Wasserfänger bzw. Trockenmittel, wie beispielsweise Molsiebe oder hydratisierbare Salze wie wasserfreies $Na_2SO_4$, mit einer mittleren Partikelgröße kleiner 500 $\mu$m, bevorzugt kleiner 100 $\mu$m, besonders bevorzugt kleiner als 50 $\mu$m, gemessen mittels Laserbeugung.

Das SM (6a)

In einer bevorzugten Ausführungsform der Erfindung ist das SM (6a) zusammengesetzt aus 55 Gew.-% oder mehr bis 99 Gew.-% oder weniger (A),

1 Gew.-% oder mehr bis 20 Gew.-% oder weniger (B) und

0 Gew.-% oder mehr bis 25 Gew.-% oder weniger (C),

basierend auf dem Gesamtgewicht SM (6a).

Besonders bevorzugt ist das SM (6a) zusammengesetzt aus

75 Gew.-% oder mehr bis 98 Gew.-% oder weniger (A),

2 Gew.-% oder mehr bis 15 Gew.-% oder weniger (B) und

0 Gew.-% oder mehr bis 10 Gew.-% oder weniger (C),

basierend auf dem Gesamtgewicht SM (6a).

Insbesondere bevorzugt ist das SM (6a) zusammengesetzt aus

80 Gew.-% oder mehr bis 96 Gew.-% oder weniger (A),

4 Gew.-% oder mehr bis 10 Gew.-% oder weniger (B) und

0 Gew.-% oder mehr bis 10 Gew.-% oder weniger (C),

basierend auf dem Gesamtgewicht erfindungsgemäßen SM (6a).

Das SM (6a) weist bei einer Temperatur oberhalb der Verfestigungstemperatur Ts des SM (6a) strukturviskose und viskoelastische Eigenschaften auf.

Strukturviskose Eigenschaften bedeuten, dass die Viskosität $\eta(\gamma)$ des SM (6a) von der Scherrate $\gamma$ abhängig ist und mit zunehmender Scherrate sinkt, wobei dieser Effekt reversibel ist und bei abnehmender Scherrate die Viskosität wieder zunimmt.

Vorzugsweise weist das eingesetzte SM (6a) bei einer Temperatur von 10 °C oberhalb der Verfestigungstemperatur Ts des SM (6a) eine hohe Viskosität bei niedriger Scherrate auf. Vorzugsweise hat die Viskosität, gemessen bei einer Scherrate von 1 s$^{-1}$ bei einer Temperatur von 10 °C oberhalb der Verfestigungstemperatur Ts des SM (6a) einen Wert von 0,1 Pa·s oder größer, bevorzugt einen Wert zwischen 0,1 Pa·s und 1.000 Pa·s, besonders bevorzugt zwischen 0,2 Pa·s und 500 Pa·s und in einer speziellen Ausführung zwischen 0,25 Pa·s und 100 Pa·s.

Gemäß der Erfindung weist das eingesetzte SM (6a) bei einer Temperatur von 10 °C oberhalb der Verfestigungstemperatur Ts des SM (6a) eine niedrige Viskosität bei hoher Scherrate auf. Die Viskosität, gemessen bei einer Scherrate von 10 s$^{-1}$ bei einer Temperatur von 10 °C oberhalb der Verfestigungstemperatur Ts des SM (6a) hat einen Wert von höchstens 15 Pa·s, bevorzugt einen Wert von 0,05 Pa·s oder größer bis 15 Pa·s oder kleiner, ganz besonders bevorzugt von 0,075 Pa·s oder größer bis 10 Pa·s oder weniger und in einer speziellen Ausführung von 0,1 Pa·s oder größer bis 9 oder kleiner.

Die Methode zur Bestimmung der Viskosität (= Scherviskosität) wird weiter unten bei den Beispielen beschrieben.

Das eingesetzte SM (6a) weist ferner bei einer Temperatur von 10 °C oberhalb der Verfestigungstemperatur Ts des SM (6a) viskoelastisches Verhalten auf und insbesondere bevorzugt viskoelastische Festkörpereigenschaften im linear-viskoelastischen (LVE) Bereich aufweist. Dies bedeutet, dass im LVE-Bereich, definiert gemäß T. G. Mezger, The Rheology Handbook, 2. ed., Vincentz Network GmbH & Co. KG; Germany, 2006, 147ff., der Verlustfaktor tan$\delta$ = G"/G' einen Wert kleiner 1, bevorzugt kleiner 0,8 und besonders bevorzugt kleiner 0,75 hat.

Das eingesetzte SM (6a) ist ferner derart ausgestaltet, dass es sich bei einer Temperatur von 10 °C oberhalb der Verfestigungstemperatur Ts des SM (6a) bevorzugt um ein stabiles physikalisches Gel handelt. Dies bedeutet, dass erfindungsgemäß der Plateau-Wert des Speichermoduls G' im LVE-Bereich bei einer Temperatur von 10 °C oberhalb der Verfestigungstemperatur Ts des SM (6a) einen Wert von mindestens 1 Pa hat, bevorzugt im Bereich von 5 bis 5.000 Pa und besonders bevorzugt im Bereich von 5 bis 2.500 Pa liegt.

Ferner ist das Gel derart ausgestaltet, dass die kritische Fließspannung $\tau_{krit}$, das heißt, die Spannung $\tau$ bei der G' = G" ist, bevorzugt einen Wert von größer 1 Pa, bevorzugt größer 2,5 Pa und besonders bevorzugt größer 3 Pa hat. Der Speichermodul G', der Verlustfaktor tan $\delta$ und die kritische Schubspannung $\tau_{krit}$ lassen sich über rheologische Messungen mithilfe eines Rheometers bestimmen, wie unten beschrieben.

Die erfindungsgemäß eingesetzten SM (6a) weisen im Temperaturbereich von 40 °C bis 80 °C einen Phasenübergang auf. D.h. die erfindungsgemäß eingesetzten SM (6a) weisen beim Abkühlen im Temperaturbereich von 40 °C bis 80 °C einen Übergang von einer Flüssigkeit mit viskoelastischem Verhalten zu einem Festkörper auf. Die diesem Phasenübergang zugeordnete Verfestigungstemperatur Ts kann aus einem rheologischen Temperatursweep-Experiment unter dynamischer Belastung der Probe mit konstanter Deformation und Frequenz unter Abkühlung im Temperaturbereich von 85 °C bis 20 °C erhalten werden. Dazu wurden die Messwerte des Betrags der komplexen Viskosität $|\eta^*|(T)$ mit Hilfe der Boltzmann-Sigmoidalfunktion analysiert. Die Verfestigungstemperatur Ts des SM (6a) liegt im Bereich von 40 °C oder mehr bis 80 °C oder weniger, bevorzugt im Bereich von 50 °C oder mehr bis 70 °C oder weniger und besonders bevorzugt im Bereich von 55 °C oder mehr bis 65 °C oder weniger. Vorzugsweise erfolgt die Verfestigung in einem engen Temperaturbereich, d.h. die Verfestigungskurve $|\eta^*|(T)$ ist steil. Dies bedeutet, dass der Steigungsparameter dT der Boltzmann-Sigmoidalfunktion einen Wert von 0,1 bis 1,5, bevorzugt 0,1 bis 1,0 aufweist.

Die Verfestigungstemperatur des SM (6a) wird vor allem durch geeignete Wahl der Wachskomponente, insbesondere durch den entsprechenden Schmelzbereich der Wachskomponente bestimmt. Die weiteren Komponenten der Zusammensetzung haben nur einen geringfügigen Einfluss auf die Verfestigungstemperatur des resultierenden SM.

Das eingesetzte SM (6a) ist ferner in einem breiten Temperaturbereich druckbar , d.h. ein Druckbild ohne die Bildung von Spritzern oder lokale Schwankungen der geometrischen Parameter liefert.

Der Temperaturbereich beträgt mindestens 1 °C oder mehr, besonders bevorzugt 2 °C oder mehr.

Silicone können auf der Oberfläche der SM (6a) spreiten .

Dies bedeutet, dass der Kontaktwinkel eines niedermolekularen Siliconöls (z.B. AK 100 der Wacker Chemie AG) einen Wert kleiner 90°, bevorzugt kleiner 60° und besonders bevorzugt das SM spontan ohne Ausbildung eines messbaren Kontaktwinkels benetzt.

Das eingesetzte SM (6a) ist ferner derart ausgestaltet, dass es sich bei kurzzeitiger Bestrahlung mit elektromagnetischer Strahlung, wie z. B. mit UV-Licht im Rahmen der Strahlungsvernetzung des sbM (6b), nicht verändert, d.h. keine Abbaureaktionen, Polymerisationen oder Verlust an Stabilität aufweist.

Das eingesetzte SM (6a) lässt sich vorzugsweise nach Aushärten des sbM (6b) leicht vom Formkörper (8) mechanisch oder durch Lösen oder Emulgieren in einem Lösungsmittel entfernen. Dies kann mechanisch z.B. mittels Druckluft, Abschleudern z. B. mittels Zentrifuge, Bürsten, Schabern oder Ähnlichem erfolgen. Ferner kann das Entfernen durch Lösen oder Emulgieren in einem geeigneten Lösungsmittel erfolgen.

Bevorzugt sind dabei umweltfreundliche und für den Endanwender unbedenkliche Lösungsmittel, vorzugsweise Wasser. Vorzugsweise wird das Lösungsmittel dazu erwärmt und/oder insbesondere dem Wasser geeignete Tenside wie anionische, kationische oder neutrale Tenside zugesetzt. Gegebenenfalls kann das Waschen maschinell erfolgen, beispielsweise in einer geeigneten Spülmaschine.

Vorzugsweise wird das eingesetzte SM (6a) nach dem Entfernen vom Formkörper (8) recycelt. Dazu hat es sich als vorteilhaft erwiesen, wenn das eingesetzte SM (6a) eine geringe Absorptionskapazität an flüchtigen Bestandteilen des sbM (6b) wie beispielsweise niedermolekulare Siloxane im Fall von Silicon-Elastomeren als sbM (6b) hat.

Bei der Herstellung der SM-Dispersionen, die partikuläre Rheologieadditive (B) enthalten, werden die partikulären Rheologieadditive (B) in die Wachskomponente (A) eingemischt. Die partikulären Rheologieadditive (B) können zur Herstellung der SM-Dispersionen bei Temperaturen bevorzugt oberhalb des Schmelzbereichs der Komponente (A) und besonders bevorzugt in einem Temperaturbereich von 1°C bis 10 °C oberhalb des Schmelzbereichs der Komponente (A) in die flüssige Wachskomponente (A) zugegeben werden und durch Benetzung verteilt, oder durch Schütteln, wie mit einem Taumelmischer, oder einem High Speed Mixer, oder durch Rühren vermischt werden. Bei geringen Partikelkonzentrationen unter 10 Gew.% reicht im Allgemeinen einfaches Rühren zur Einarbeitung der Partikel (B) in die Flüssigkeit (A). Bevorzugt erfolgt das Einarbeiten und Dispergieren der Partikel (B) in die flüssige Wachskomponente (A) bei sehr hohem Schergefälle. Hierfür sind vorzugsweise schnelllaufende Rührer, schnelllaufende Dissolver, z.B. mit Umlaufgeschwindigkeiten von 1-50 m/s, schnelllaufende Rotor-Stator Systeme, Sonolatoren, Scherspalte, Düsen, Kugelmühlen und andere geeignet.

Dies kann in diskontinuierlichen und in kontinuierlichen Verfahren erfolgen, bevorzugt sind kontinuierliche Verfahren. Im Besonderen geeignet sind Systeme, die zunächst mit effektiven Rührorganen die Benetzung und Einarbeitung der partikulären Rheologieadditive (B) in die Wachskomponente (A) erzielen, z.B. in einem geschlossenen Behältnis oder Kessel, und in einem zweiten Schritt die partikulären Rheologieadditive (B) bei sehr hohem Schergefälle dispergieren. Dies kann durch ein Dispergiersystem in dem ersten Behältnis geschehen, oder durch Umpumpen in externe Rohrleitungen, die ein Dispergierorgan enthält aus dem Behältnis unter bevorzugt geschlossener Rückführung in das Behältnis. Durch eine teilweise Rückführung, und teilweise kontinuierliche Entnahme kann dieser Prozess bevorzugt kontinuierlich gestaltet werden. Insbesondere geeignet ist zur Dispergierung der partikulären Rheologieadditive (B) in der SM-Dispersion der Einsatz von Ultraschall im Bereich von 5 Hz bis 500 kHz, bevorzugt 10 kHz bis 100 kHz, ganz besonders bevorzugt 15 kHz bis 50 kHz; die Ultraschalldispergierung kann kontinuierlich oder diskontinuierlich erfolgen. Dies kann durch einzelne Ultraschallgeber, wie Ultraschallspitzen geschehen, oder in Durchflusssysteme, die, gegebenenfalls durch eine Rohrleitung oder Rohrwand abgetrennter Systeme, einen oder mehrere Ultraschallgeber enthalten.

Ultraschalldispergierung kann kontinuierlich oder diskontinuierlich erfolgen.

Das Dispergieren kann in üblichen, zur Herstellung von Emulsionen bzw. Dispersionen geeigneten Mischgeräten, die einen ausreichend hohe Eintrag von Scherenergie leisten, wie beispielsweise schnelllaufende Stator-Rotor-Rührgeräte, wie z. B. nach Prof. P. Willems, bekannt unter dem registrierten Warenzeichen "Ultra-Turrax", oder anderen Stator-Rotor-Systemen, bekannt unter dem registrierten Warenzeichen wie Kady, Unimix, Koruma, Cavitron, Sonotron, Netzsch oder Ystral erfolgen. Andere Verfahren sind Ultraschallverfahren wie US Finger/Geber, oder US Durchflusszellen, oder US Systeme oder analog wie von Sonorex /Bandelin angeboten, oder Kugelmühlen, wie z.B. Dyno-Mill von WAB, CH. Weitere Verfahren sind schnelllaufende Rührer, wie Flügelrührer oder Balkenrührer, Dissolver wie Scheibendissolver z.B. der Firma Getzmann, oder Mischsysteme wie Planetendissolver, Balkendissolver oder andere kombinierte Aggregate aus Dissolver- und Rührersystemen. Andere geeignete Systeme sind Extruder oder Kneter.

Vorzugsweise erfolgt das Einarbeiten und Dispergieren der partikulären Rheologieadditive (B) unter Vakuum oder beinhaltet einen Evakuierungsschritt.

Vorzugsweise erfolgt das Einarbeiten und Dispergieren der partikulären Rheologieadditive (B) bei erhöhter Temperatur oberhalb des Schmelzbereichs der Komponente (A), besonders bevorzugt in einem Temperaturbereich von 10 °C oberhalb des Schmelzbereichs der Komponente (A) bis zu einer Temperatur von maximal 200 °C. Vorzugsweise kann der Temperaturanstieg durch externes Heizen bzw. Kühlen gesteuert werden. Selbstverständlich kann die SM-Dispersion auch auf andere Weise hergestellt werden.

Vorzugsweise werden die eingesetzten SM (6a) in geeignete Dosierbehälter (4a) abgefüllt, wie Kartuschen, Schlauchbeutel oder ähnliche. Bevorzugt werden die Dosierbehälter (4a) anschließend durch Einschweißen z.B. in metallisierte Folie, vor Zutritt von Luftfeuchte geschützt.

Vorzugsweise werden die eingesetzten SM (6a) vor und/oder während der Abfüllung entgast, beispielsweise durch Anlegen eines geeigneten Vakuums oder mittels Ultraschall.

Vorzugsweise werden die eingesetzten SM (6a) vor der Abfüllung getrocknet, beispielsweise durch Anlegen eines geeigneten Vakuums bei erhöhter Temperatur.

Der Gehalt an freiem Wasser im eingesetzten SM (6a), d. h. Wasser, das nicht an Wasserfänger oder Trockenmittel gebunden wurde, beträgt kleiner 10 Gew.-%, bevorzugt kleiner 5 Gew.-%, besonders bevorzugt kleiner 1 Gew.-% bezogen auf die Gesamtmasse des SM. Der Gehalt an freiem Wasser kann beispielsweise mittels Karl-Fischer-Titration oder NMR-Spektroskopie quantitativ bestimmt werden.

Vorzugsweise erfolgt Abfüllung der eingesetzten SM (6a) bei erhöhter Temperatur oberhalb der Verfestigungstemperatur TS des SM (6a), besonders bevorzugt in einem Temperaturbereich von 10°C oberhalb der Verfestigungstemperatur TS des SM (6a) bis zu einer Temperatur von maximal 200 °C.

Vorzugsweise werden die eingesetzten SM (6a) aus den Dosierbehältern durch mechanischen Druck bzw. mittels Luftdruck oder Vakuum ausgebracht.

Vorzugsweise erfolgt die Ausbringung der eingesetzten SM (6a) aus den Dosierbehältern bei erhöhter Temperatur oberhalb der Verfestigungstemperatur TS des SM (6a), besonders bevorzugt in einem Temperaturbereich von 10 °C oberhalb der Verfestigungstemperatur TS des SM (6a) bis zu einer Temperatur von maximal 100 °C.

**Beispiele**

Die folgenden Beispiele dienen der Erläuterung der vorliegenden Erfindung ohne diese zu beschränken.

Alle Prozentangaben beziehen sich auf das Gewicht. Falls nicht anders angegeben, werden alle Manipulationen bei Raumtemperatur von 25°C und unter Normaldruck (1,013 bar) ausgeführt. Bei den Apparaten handelt es sich um handelsübliche Laborgeräte wie sie von zahlreichen Geräteherstellern käuflich angeboten werden.

**Analytische Methoden zur Charakterisierung der Kieselsäuren (Komponente B)**

Methanolzahl

Test der Benetzbarkeit mit Wasser-Methanol Gemischen (Volumen% MeOH in Wasser): Einschütteln eines gleichen Volumens der Kieselsäure mit gleichem Volumen an Wasser-Methanol Gemisch

- Start mit 0% Methanol
- bei Nicht-Benetzung schwimmt zumindest ein Teil der Kieselsäure auf: Es ist ein Gemisch mit um 5 Vol% höherem MeOH-Anteil zu verwenden
- bei Benetzung sinkt das gesamte Volumen der Kieselsäure ein: Anteil MeOH (Vol%) in Wasser gibt die Methanolzahl.

Kohlenstoffgehalt (%C)

Die Elementaranalyse auf Kohlenstoff erfolgte nach DIN ISO 10694 unter Verwendung eines CS-530 Elementaranalysators der Firma Eltra GmbH (D-41469 Neuss).

Rest-Silanolgehalt

Die Bestimmung des Rest-Silanolgehalts erfolgte analog G. W. Sears et al. Analytical Chemistry 1956, 28, 1981ff mittels Säure-Base-Titration der in einer 1:1-Mischung aus Wasser und Methanol suspendierten Kieselsäure. Die Titration erfolgte im Bereich oberhalb des isoelektrischen Punktes und unterhalb des pH-Bereichs der Auflösung der Kieselsäure. Der Rest-Silanolgehalt in % kann demnach nach folgender Formel errechnet werden:

$$\mathrm{SiOH = SiOH(silyl)/SiOH(phil)\ 100\%}$$

mit

SiOH(phil): Titrationsvolumen aus der Titration der unbehandelten Kieselsaure
SiOH(silyl): Titrationsvolumen aus der Titration der silylierten Kieselsaure

DBP-Zahl

Die Dibutylphthalatabsorption wird gemessen mit einem Gerät RHEOCORD 90 der Fa. Haake, Karlsruhe.

Hierzu werden 12 g des Siliciumdioxidpulvers auf 0,001 g genau in eine Knetkammer eingefüllt, diese mit einem Deckel verschlossen und Dibutylphthalat über ein Loch im Deckel mit einer vorgegebenen Dosierrate von 0,0667 ml/s eindosiert. Der Kneter wird mit einer Motordrehzahl von 125 Umdrehungen pro Minute betrieben. Nach Erreichen des Drehmomentmaximums werden der Kneter und die DBP-Dosierung automatisch abgeschaltet. Aus der verbrauchten Menge DBP und der eingewogenen Menge der Partikel wird die DBP-Absorption berechnet nach: DBP-Zahl (g/100 g) = (Verbrauch DBP in g/Einwaage Pulver in g) x 100.

Rheologische Messungen

Alle Messungen wurden auf einem Rheometer (MCR 302 mit Luftlagerung der Firma Anton Paar) bei einer Temperatur von 10 °C oberhalb der Verfestigungstemperatur Ts des SM, sofern nicht anders genannt, durchgeführt. Es wurde mit Platte-Platte-Geometrie (25 mm) bei einer Spaltweite von 300 $\mu$m gemessen.

Überschüssiges Probenmaterial wurde nach Anfahren des Messspaltes mittels Spatel entfernt (s. g. trimmen). Vor dem Start des eigentlichen Messprofils wurde die Probe einer definierten Vorscherung unterworfen um die rheologische Historie aus Probenauftrag und Anfahren der Messposition zu beseitigen. Die Vorscherung umfasste eine Scherphase von 60 s bei Scherrate von 100 s$^{-1}$ gefolgt von einer Ruhephase von 300 s.

Die Scherviskositäten wurden aus einem sogenannten Stufenprofil ermittelt, bei dem die Probe jeweils für 120 s bei einer konstanten Scherrate von 1 s$^{-1}$ und 10 s$^{-1}$ geschert wurde. Die Messpunktsdauer betrug dabei 12 s (1 s$^{-1}$) bzw. 10 s (10 s$^{-1}$) und als Scherviskosität wurde der Mittelwert der letzten 4 Datenpunkte eines Blocks herangezogen.

Der Plateauwert des Speichermodul G', der Verlustfaktor tan $\delta$ und die kritische Schubspannung $\tau_{krit}$ wurden aus einem dynamischen Deformationsversuch erhalten, bei dem die Probe bei einer konstanten Kreisfrequenz von 10 rad/s mit zunehmender Deformationsamplitude unter Deformationsvorgabe im Deformationsbereich von 0,01 bis 100 belastet wurde. Messpunktsdauer war 30 s mit 4 Messpunkten pro Dekade. Der Plateau-Wert des Speichermoduls G' ist dabei der Mittelwert der Datenpunkte 2 bis 7 mit der Maßgabe, dass diese im linear-viskoelastischen Bereich liegen, d.h. keine Abhängigkeit von der Deformation bzw. Schubspannung aufweisen. Als Wert für den Verlustfaktor tan $\delta$ wurde der Wert beim 4. Messpunkt gewählt.

Die Verfestigungstemperatur Ts der SM wurde mittels Temperatursweep unter dynamischer Scherbelastung ermittelt. Dabei wurde die Probe schrittweise mit einer Abkühlrate von 1,5 K/min von 85 °C auf 20 °C abgekühlt. Dabei wurde die Probe mit einer konstanten Deformation von 0,1% bei einer konstanten Frequenz von 10 Hz belastet. Die Messpunktsdauer betrug 0,067 min. Man erhält den Speichermodul G'(T), den Verlustmodul G"(T), bzw. die komplexe Viskosität $|\eta^*|(T)$, jeweils als Funktion der Temperatur T. Eine Auftragung $|\eta^*|(T)$ gegen T ergibt eine sigmoide Kurve. Die Verfestigungstemperatur $T_s$ ist dabei die Temperatur, bei der die Kurve seinen Wendepunkt aufweist. Dieser lässt sich mit Hilfe der Software ORIGIN durch Bildung der 1. Ableitung der Kurve ermitteln.

**3D-Drucker:** Für die nachfolgend beschriebenen Beispiele des erfindungsgemäßen Verfahrens wurde als generative Fertigungsanlage ein "NEO-3D-Drucker" der Firma "German RepRap GmbH" verwendet, welcher für die Versuche umgebaut und angepasst wurde. Die ursprünglich im "NEO-3D-Drucker" montierte Thermoplast-Filament-Dosiereinheit wurde durch eine Jetting-Düse der Firma "Vermes Microdispensing GmbH, Otterfing" ersetzt, um höherviskose bis standfest-pastöse Massen wie die erfindungsgemäß eingesetzten SM tröpfchenweise abscheiden zu können.

Weil der "NEO"-Drucker für die Installation von Jetting-Düsen nicht standardmäßig ausgerüstet war, wurde er modifiziert.

Die Vermes-Jetting-Düse wurde so in die Drucker-Steuerung eingebunden, daß das Start-Stop-Signal (Triggersignal) der Vermes-Jetting-Düse von der GCode-Steuerung des Druckers betätigt wurde. Dazu wurde in der GCode-Steuerung ein spezielles Signal hinterlegt. Die GCode-Steuerung des Computers schaltete damit lediglich die Jetting-Düse ein und aus (Start- und Stop der Dosierung).

Für die Signalübertragung des Start-Stop-Signals wurde das Heizkabel der ursprünglich installierten Filament-Heizdüse des "NEO"-Druckers getrennt und mit der Vermes-Düse verbunden.

Die übrigen Dosierparameter (Dosier-Frequenz, Rising, Falling usw.) der Vermes-Jetting-Düse wurden mittels der MDC 3200+ Microdispensing Control Unit eingestellt.

Die Steuerung des 3D-Druckers erfolgte mittels eines Computers. Die Software-Steuerung und Steuersignal-Anbindung des 3D-Druckers (Software: "Repetier-Host") wurde dahingehend modifiziert, dass damit sowohl die Bewegung der Dosierdüse in den drei Raumrichtungen gesteuert werden konnte als auch das Signal zur Tropfenabscheidung. Die maximale Verfahrgeschwindigkeit des "NEO" 3D Druckers beträgt 0,3 m/s.

**Dosiersystem:** Als Dosiersystem für die verwendeten SM-Massen bzw. das strahlungsvernetzende Silicone-Elastomer-Strukturmaterial diente das Microdispensing-Dosiersystem "MDV 3200 A" der Firma "Vermes Microdispensing GmbH", bestehend aus einem Komplettsystem mit folgenden Komponenten: a) MDV 3200 A - Düseneinheit mit einem Anschluss für Luer-Lock Kartuschen, welche an der Kartuschen-Oberseite mit 3-8 bar Druckluft (Schlauch mit Adapter) beaufschlagt wurden, b) Vermes Begleit-Düsenheizungs-System MDH-230tfl links, c) Kartuschenheizung MCH30-230 mit MCH Druckluftentlastung zur Fixierung einer Hotmelt Kartusche, MHC 3002 Microdispensing Heizung Controller und Heizungskabel MCH-230tg, d) MDC 3200+ MicroDispensing Control Unit, die wiederum mit der PC-Steuerung verbunden war sowie über bewegliche Kabel mit der Düse, ermöglichte die Einstellung der Jetting Dosier-Parameter (Rising, Falling, Opentime, Needlelift, Delay, No Puls, Heater, Düse, Abstand, Voxeldurchmesser, Luft-Vordruck an der Kartusche). Es stehen Düsen mit Durchmessern von 50, 100, 150 und 200 $\mu$m zur Verfügung. Damit können feinste SM-Tröpfchen (6a) im Nanoliter-Bereich auf jeder beliebigen xyz-Position der Basisplatte bzw. des vernetzten sbM (6b) punktgenau platziert werden. Sofern bei den einzelnen Beispielen nichts anderes angegeben ist, war in dem Vermes-Ventil als Standard-Düseneinsatz eine 200 $\mu$m-Düse eingebaut (Düseneinsatz N11-200).

Als Vorratsbehälter (4a) für die SM-Masse (6b) dienten senkrecht stehende 30 ml Luer-Lock Kartuschen, die flüssigkeitsdicht an die Dispensing-Düse aufgeschraubt und mit Druckluft beaufschlagt wurden.

Die Steuerung des modifizierten "NEO"-3D-Druckers und des "Vermes"-Dosiersystems erfolgte mit einem PC und einer Open-Source-Software "Simplify 3D".

**Strahlungsquelle:**

**UV-Kammer mit Osram-UV-Lampe**

Für Offline-UV-Bestrahlung zur Vernetzung der sbM (6b) von Bauteilen wurde eine UV-Bestrahlungskammer verwendet, die innen verspiegelt war und folgende Außen-Abmessungen hatte:

| | |
|---|---|
| Länge | 50 cm |
| Höhe | 19 cm |
| Breite | 33 cm |

Der Abstand zwischen der UV-Leuchtstofflampe und dem Substrat betrug 15 cm.

Strahlungsquelle: UV-Lampe mit 36 Watt elektrischer Leistung, Typ "Osram Puritec HNS L 36 W 2G11" mit einer Wellenlänge von 254 nm,

Osram GmbH, Steinerne Furt 62, 86167 Augsburg.

**Konditionierung der SM-Massen bzw. der sbM-Massen:** Die verwendeten sbM-Massen wurden sämtlich vor der Verarbeitung in einem 3D-Drucker entflüchtigt, indem 100 g der Masse in einer offenen PE-Dose in einem Exsikkator 3h bei einem Vakuum von 10 mbar und Raumtemperatur (=25°C) gelagert wurden. Anschließend wurde die Masse in eine 30ml-Kartusche mit Bajonettverschluss luftfrei abgefüllt und mit einem passenden Auspress-Stempel (Kunststoffkolben) verschlossen. Die Luer-Lock Kartusche wurde dann in die vertikale Kartuschenhalterung des Vermes-Dosierventils flüssigkeitsdicht mit der Luer-Lock-Verschraubung nach unten eingeschraubt und Druck-Stempel an der Kartuschenoberseite mit 3-8 bar Druckluft beaufschlagt; der in der Kartusche befindliche Auspress-Stempel verhindert, dass die Druckluft in die zuvor blasenfrei evakuierte Masse gelangen kann.

Die SM-Massen wurden bei einer Temperatur von 10 °C oberhalb der Verfestigungstemperatur Ts des SM in einem Stickstoffgespülten Trockenschrank über Nacht aufgeschmolzen, in Kartuschen abgefüllte und heiß 5 min bei 2000 rpm luftfrei zentrifugiert. Die Luer-Lock Kartusche wurde dann in die vertikale Kartuschenheizung des Vermes-Dosierventils flüssigkeitsdicht mit der Luer-Lock-Verschraubung nach unten eingeschraubt und Druck-Stempel an der Kartuschenoberseite mit 3-8 bar Druckluft beaufschlagt; der in der Kartusche befindliche Auspress-Stempel verhindert, dass die Druckluft in die zuvor blasenfrei zentrifugierte Masse gelangen kann. Die Kartuschen wurden vor Start des Druckvorgangs für mindestens 30 min auf die Zieltemperatur temperiert.

**Bestimmung des druckbaren Temperaturbereichs:** (= Temperaturbereich Heizung Düse (s. Tabelle 3)

Der Temperaturbereich wurde anhand des Druckbildes u.g. Rechteckspirale bestimmt. Im druckbaren Temperaturbereich wird eine gleichförmige Rechteckspirale ohne Auftreten von Spritzern oder signifikanten Abweichungen in den geometrischen Parametern der Spirale erhalten.

**Beispiel 1 (B1):**

In einem Labormischer der Fa. PC Laborsystem GmbH mit Balkendissolver (Durchmesser Dissolverscheibe 60 mm) wurden 380 g eines kommerziellen gelben Bienenwachses mit einem Schmelzbereich von 61 - 65 °C und einer Säurezahl von 17 - 22 mg KOH/g (erhältlich bei Carl Roth GmbH + Co. KG) vorgelegt und bei einer Temperatur von 65 °C 20 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 30 min. zugegeben. Anschließend wurde bei 70 °C 1,0 h unter Vakuum bei 800 upm dispergiert. Es wurde ein klares Gel erhalten, das bei Temperaturen unter 60 °C zu einer gelblichen Masse erstarrt und dessen analytische Daten in Tabelle 2 zusammengefasst sind.

**Beispiel 2 (B2):**

In einem Labormischer der Fa. PC Laborsystem GmbH mit Balkendissolver (Durchmesser Dissolverscheibe 60 mm) wurden 370 g eines kommerziellen gelben Bienenwachses mit einem Schmelzbereich von 61 - 65 °C und einer Säurezahl von 17 - 22 mg KOH/g (erhältlich bei Carl Roth GmbH + Co. KG) vorgelegt und bei einer Temperatur von 65 °C 30 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 30 min. zugegeben. Anschließend wurde bei 70 °C 1,0 h unter Vakuum bei 800 upm dispergiert. Es wurde ein klares Gel erhalten, das bei Temperaturen unter 60 °C zu einer gelblichen Masse erstarrt und dessen analytische Daten in Tabelle 2 zusammengefasst sind.

**Beispiel 3 (B3):**

In einem Labormischer der Fa. PC Laborsystem GmbH mit Balkendissolver (Durchmesser Dissolverscheibe 60 mm) wurden 360 g eines kommerziellen gelben Bienenwachses mit einem Schmelzbereich von 61 - 65 °C und einer Säurezahl von 17 - 22 mg KOH/g (erhältlich bei Carl Roth GmbH + Co. KG) vorgelegt und bei einer Temperatur von 65 °C 40 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 30 min. zugegeben. Anschließend wurde bei 70 °C 1,0 h unter Vakuum bei 800 upm dispergiert. Es wurde ein klares Gel erhalten, das bei Temperaturen unter 60 °C zu einer gelblichen Masse erstarrt und dessen analytische Daten in Tabelle 2 zusammengefasst sind.

**Beispiel 4 (B4):**

In einem Labormischer der Fa. PC Laborsystem GmbH mit Balkendissolver (Durchmesser Dissolverscheibe 60 mm) wurden 360 g eines kommerziellen gelben Bienenwachses mit einem Schmelzbereich von 61 - 65 °C und einer Säurezahl von 17 - 22 mg KOH/g (erhältlich bei Carl Roth GmbH + Co. KG) vorgelegt und bei einer Temperatur von 65 °C 40 g einer hydrophoben pyrogenen Kieselsäure HDK® H20RH (erhältlich bei Wacker Chemie AG; analytische Daten s. Tabelle 1) portionsweise unter Rühren über einen Zeitraum von ca. 30 min. zugegeben. Anschließend wurde bei 70 °C 1,0 h unter Vakuum bei 800 upm dispergiert. Es wurde ein klares Gel erhalten, das bei Temperaturen unter 60 °C zu einer gelblichen Masse erstarrt und dessen analytische Daten in Tabelle 2 zusammengefasst sind.

**Beispiel 5 (B5):**

In einem Labormischer der Fa. PC Laborsystem GmbH mit Balkendissolver (Durchmesser Dissolverscheibe 60 mm) wurden 370 g eines kommerziellen weißen Bienenwachses mit einem Schmelzbereich von 61 - 65 °C und einer Säurezahl von 17 - 22 mg KOH/g (erhältlich bei Carl Roth GmbH + Co. KG) vorgelegt und bei einer Temperatur von 65 °C 30 g einer hydrophoben pyrogenen Kieselsäure HDK® H18 (erhältlich bei Wacker Chemie AG; analytische Daten s. Tabelle 1) portionsweise unter Rühren über einen Zeitraum von ca. 30 min. zugegeben. Anschließend wurde bei 70 °C 1,0 h unter Vakuum bei 800 upm dispergiert. Es wurde ein klares Gel erhalten, das bei Temperaturen unter 60 °C zu einer weißen Masse erstarrt und dessen analytische Daten in Tabelle 2 zusammengefasst sind.

**Beispiel 6 (B6):**

In einem Labormischer der Fa. PC Laborsystem GmbH mit Balkendissolver (Durchmesser Dissolverscheibe 60 mm) wurden 360 g eines kommerziellen gelben Bienenwachses mit einem Schmelzbereich von 61 - 65 °C und einer Säurezahl von 17 - 22 mg KOH/g (erhältlich bei Carl Roth GmbH + Co. KG) vorgelegt und bei einer Temperatur von 65 °C 40 g einer hydrophilen pyrogenen Kieselsäure HDK® N20 (erhältlich bei Wacker Chemie AG; analytische Daten s. Tabelle 1) portionsweise unter Rühren über einen Zeitraum von ca. 30 min. zugegeben. Anschließend wurde bei 70 °C 1,0 h unter Vakuum bei 800 upm dispergiert. Es wurde eine klare viskose Flüssigkeit erhalten, die bei Temperaturen unter 60 °C zu einer gelblichen Masse erstarrt und dessen analytische Daten in Tabelle 2 zusammengefasst sind.

**Beispiel 7 (B7; nicht erfindungsgemäß):**

Ein kommerzielles gelbes Bienenwachs mit einem Schmelzbereich von 61 - 65 °C und einer Säurezahl von 17 - 22 mg KOH/g (erhältlich bei Carl Roth GmbH + Co. KG) wurde analog der Beispiel B1-B6 rheologisch charakterisiert. Die analytischen Daten sind in Tabelle 2 zusammengefasst.

**Tabelle 1**

|  | HDK® H18 | HDK® H20RH | HDK® H20 | HDK® N20 |
|---|---|---|---|---|
| Methanolzahl (%) | 74 | 67 | 34 | 0 |
| % Kohlenstoff | 4,8 | 10,1 | 1,6 | N/A |
| DBP-Zahl (g/100g) | 165 | 224 | 197 | 250 |
| Rest-SiOH (nm$^{-1}$) | 0,36 | 0,37 | 0,9 | 1,8 |

**Tabelle 2**

|  | Beispiel 1 (B1) | Beispiel 2 (B2) | Beispiel 3 (B3) | Beispiel 4 (B4) | Beispiel 5 (B5) | Beispiel 6 (B6) | Beispiel 7 (B7) |
|---|---|---|---|---|---|---|---|
| Anteil pRA (%) | 5 | 7,5 | 10 | 10 | 7,5 | 10 | N/A |
| $\eta$/1 s$^{-1}$ (Pa·s) | 4,3 | 13,3 | 81,2 | 1,1 | 12,6 | 0,72 | 0,017 |
| $\eta$/10 s$^{-1}$ (Pa·s) | 0,5 | 1,7 | 8,2 | 0,32 | 1,7 | 0,46 | 0,017 |
| $T_s$ (°C) | 60,8 | 60,3 | 60,2 | 60,4 | 60,8 | 60 | 61,4 |
| dT | 0,155 | 0,924 | 0,885 | 0,250 | 0,628 | 0,28 | 0,197 |
| G' (Pa) | 51,5 | 953 | 2330 | 17,2 | 400 | 1,5 | N/A |
| tan $\delta$ | 0,2 | 0,19 | 0,161 | 0,638 | 0,215 | 2,27 | N/A |
| $\tau_{krit}$ (Pa) | 10,3 | 32,6 | 91,5 | 9,1 | 30,6 | N/A | N/A |

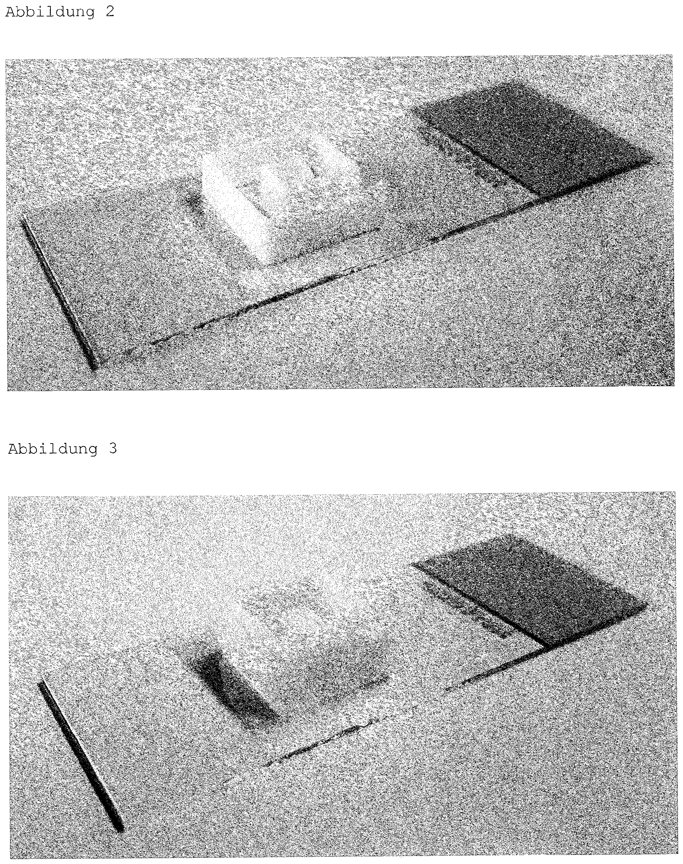

**Jetting-Beispiel J1:** B1 wurde mit den in Tabelle 3 angegebenen Jetting-Düsenparametern auf einem Glas-Objektträger der Fläche 25 x 75 mm tröpfchenweise zu einer Rechteck-Spirale mit einer Wandstärke von ca. 900 $\mu$m und einer Kantenlänge von 15 mm und einer Höhe von 10 mm abgeschieden. Die rheologischen Eigenschaften der SM-Schmelze ermöglichen eine ausgezeichnete Formstabilität und Abbildungsgenauigkeit der abgeschiedenen Geometrie. Es resultierte ein stabiler Formkörper ohne schrumpfungsbedingte Ablösung von der Glasplatte (vgl. Abbildung 2).

**Jetting-Beispiel J2:** B2 wurde mit den in Tabelle 3 angegebenen Jetting-Düsenparametern abgeschieden. Es resultierte ein stabiler Formkörper ohne schrumpfungsbedingte Ablösung von der Glasplatte analog J1.

**Jetting-Beispiel J3:** B3 wurde mit den in Tabelle 3 angegebenen Jetting-Düsenparametern abgeschieden. Es resultierte ein stabiler Formkörper ohne schrumpfungsbedingte Ablösung von der Glasplatte analog J1.

**Jetting-Beispiel J4:** B4 wurde mit den in Tabelle 3 angegebenen Jetting-Düsenparametern abgeschieden. Es resultierte ein stabiler Formkörper ohne schrumpfungsbedingte Ablösung von der Glasplatte analog J1.

**Jetting-Beispiel J5:** B5 wurde mit den in Tabelle 3 angegebenen Jetting-Düsenparametern abgeschieden. Es resultierte ein stabiler Formkörper ohne schrumpfungsbedingte Ablösung von der Glasplatte analog J1.

**Jetting-Beispiel J6:** B6 wurde mit den in Tabelle 3 angegebenen Jetting-Düsenparametern abgeschieden. Es resultierte ein stabiler Formkörper mit schrumpfungsbedingter Ablösung von der Glasplatte (vgl. Abbildung 3).

**Jetting-Beispiel J7 (nicht erfindungsgemäß):** B7 wurde mit den in Tabelle 3 angegebenen Jetting-Düsenparametern abgeschieden. Der gewünschte Formkörper ließ sich nur unter genau kontrollierten klimatischen Umgebungsbedingungen (Raumklimatisierung auf exakt 25 °C) erhalten. Nur unter diesen Bedingungen resultierte ein stabiler Formkörper ohne schrumpfungsbedingte Ablösung von der Glasplatte analog J1.

**Jetting-Beispiel J11:** SEMICOSIL® 810 UV 1K, eine durch UV-Licht induziert additions-vernetzende, transluzente Siliconkautschukmasse mit einer Viskosität von ca. 310.000 mPa.s (bei 0,5 s$^{-1}$) und einer Vulkanisathärte Shore A von 40 (erhältlich bei WACKER CHEMIE AG) wurde mit den in Tabelle 4 angegebenen Jetting-Düsenparametern auf einem Glas-Objektträger der Fläche 25 x 75 mm tröpfchenweise zu einer Rechteck-Spirale mit einer Wandstärke von 2 mm, einer Kantenlänge von 15 mm und einer Höhe von 3,5 mm abgeschieden. Die Spirale wurde in der oben beschriebenen Offline-UV-Kammer und den dort genannten Vernetzungsparametern vernetzt. Anschließend wurde nach Reinigung des Düsenkopfs bzw. der Zuleitungen und Austausch der Kartusche der Hohlraum der Spirale mit Stützmaterial B3 ausgejetted (Jetting-Düsenparameter s. Tabelle 4). Anschließend wurde nach erneuter Reinigung des Düsenkopfs bzw. der Zuleitungen und Austausch der S-M-Kartusche gegen eine Kartusche SEMICOSIL® 810 UV 1K ein Deckel mit einer Dicke von 1,5 mm auf die Spirale gedruckt, wie oben beschrieben vernetzt und das Stützmaterial mit Wasser ausgewaschen.

**Tabelle 3**

|  | Beispiel 1 (J1) | Beispiel 2 (J2) | Beispiel 3 (J3) | Beispiel 4 (J4) | Beispiel 5 (J5) | Beispiel 6 (J6) | Beispiel 7 (J7) |
|---|---|---|---|---|---|---|---|
| Düsen-Durchmesser ($\mu$m) | 200 | 200 | 200 | 200 | 200 | 200 | 200 |
| Rising (ms): | 0,4 | 0,4 | 1 | 0,2 | 0,4 | 0,5 | 4 |
| Falling (ms): | 1 | 0,85 | 1 | 1,3 | 0,85 | 0,5 | 4 |
| Open Time (ms): | 0 | 0 | 1 | 0 | 0 | 0,2 | 0 |
| Needle Lift (%) : | 50 | 51 | 100 | 40 | 51 | 50 | 50 |
| Delay (ms): | 100 | 100 | 100 | 100 | 100 | 100 | 100 |
| Heizung Kartusche (°C) | 70 | 67 | 85 | 78 | 67 | 70 | 65,2 |
| Temperaturbereich Heizung Düse (°C): | 65-72 | 65-72 | 82-84 | 66-78 | 65-72 | 67-69 | 65,2-65,5 |
| Kartuschen-Vordruck (bar) | 1 | 2 | 2 | 2 | 2 | 2 | 2 |
| Voxeldurchmes ser ($\mu$m) | 920 | 740 | 1170 | 620 | 821 | 750 | 900 |

Die Ergebnisse der Tabelle 3 zeigen deutlich, dass der Einsatz eines partikulären rheologischen Additivs zu einer Erhöhung des druckbaren Temperaturbereichs führt (vgl. Temperaturbereich Heizung Düse der Beispiele 1 bis 6). Insbesondere konnte das Temperaturfenster gegenüber Stützmaterialien ohne partikuläres rheologisches Additiv (vgl. Beispiel 7) mehr als verdoppelt werden.

**Tabelle 4**

|  | Beispiel J11 Siliconmasse | Beispiel J11 Stützmaterial B2 |
|---|---|---|
| Düsen-Durchmesser ($\mu$m) | 200 | 200 |
| Rising (ms): | 0,3 | 0,4 |
| Falling (ms): | 0,1 | 0,85 |
| Open Time (ms): | 15 | 0 |
| Needle Lift (%): | 100 | 51 |
| Delay (ms) | 25 | 100 |
| Heizung Düse (°C): | 40 | 70 |
| Heizung Kartusche (°C) | - | 67 |
| Kartuschen-Vordruck (bar) | 3,0 | 3 |
| Voxeldurchmesser ($\mu$m) | 700 | 700 |

**Patentansprüche**

1. Verfahren zum additiven Aufbau von Formkörpern (8) durch ortsspezifische Ausbringung eines strukturbildenden Materials, sbM (6b), wobei gleichzeitig oder zeitlich versetzt mindestens ein Stützmaterial, SM (6a), in Bereiche ausgebracht wird, die frei von sbM (6b) bleiben,
wobei das Ausbringen des SM (6a) über eine Vorrichtung erfolgt, die mindestens eine Ausbringeinheit (1a) für das SM (6a) aufweist, die durch ortsspezifisches Ausbringen des SM (6a) die Stützstruktur für den Formkörper (8) sukzessive aufbaut,
**dadurch gekennzeichnet, dass** das SM (6a)

- bei einer Temperatur oberhalb der Verfestigungstemperatur Ts des SM (6a) eine strukturviskose, viskoelastische Zusammensetzung ist, enthaltend

(A) wenigstens ein Wachs umfassend wenigstens eine Verbindung der Formel (I):

$$R'\text{-COO-}R'' \qquad (I)$$

wobei R' und R" gleich oder verschieden sein können und aus gesättigten oder ungesättigten gegebenenfalls substituierten aliphatischen Kohlenwasserstoffgruppen mit 10 bis 36 Kohlenstoffatomen ausgewählt sind,
(B) mindestens ein partikuläres rheologisches Additiv, und
(C) optional weitere Zusatzstoffe

- eine Scherviskosität von höchstens 15 aufweist, gemessen bei einer Temperatur von 10 °C oberhalb der Verfestigungstemperatur Ts des SM (6a), und einer Scherrate von 10 s$^{-1}$, gemessen mit einem Rheometer mit Platte-Platte-Geometrie bei einem Durchmesser von 25 mm und einer Spaltweite von 300 $\mu$m,
- einen Speichermodul G' von mindestens 1 Pa, gemessen auf einem Rheometer mit Platte-Platte-Geometrie, Durchmesser 25 mm und Spalteweite von 300 $\mu$m und bei einer Temperatur von 10 °C oberhalb der Verfestigungstemperatur Ts des SM (6a), und
- eine Verfestigungstemperatur Ts von 40 °C oder mehr bis 80 °C oder weniger aufweist,

und nach Abschluss des Aufbaus des Formkörpers (8), das SM (6a) aus dem Formkörper (8) entfernt wird, wobei

- die Verfestigungstemperatur Ts auf einem Rheometer mit Platte-Platte-Geometrie, Durchmesser 25 mm und Spaltweite von 300 $\mu$m, mittels Temperatursweep unter dynamischer Scherbelastung ermittelt wird, wobei die Probe schrittweise mit einer Abkühlrate von 1,5 K/min von 85 °C auf 20 °C abgekühlt wird und die Probe mit einer konstanten Deformation von 0,1% bei einer konstanten Frequenz von 10 Hz belastet wird, Messpunktsdauer 0,067 min, und
- das Speichermodul G' aus einem dynamischen Deformationsversuch erhalten wurde, bei dem die Probe bei einer konstanten Kreisfrequenz von 10 rad/s mit zunehmender Deformationsamplitude unter Deformationsvorgabe im Deformationsbereich von 0,01 bis 100 belastet wurde, Messpunktsdauer 30 s mit 4 Messpunkten pro Dekade, wobei der Speichermodul G' der Mittelwert der Datenpunkte 2 bis 7 ist, mit der Maßgabe, dass diese im linear-viskoelastischen Bereich liegen.

2. Verfahren gemäß Anspruch 1 **dadurch gekennzeichnet, dass** die Ausbringeinheit (1a) in x-, y- und z-Richtung mit einer Genauigkeit von mindestens ± 100 $\mu$m positioniert werden kann, und somit das ortsspezifische Ausbringen des SM (6a) sowohl in der x,y-Arbeitsebene, als auch in z-Richtung erfolgt.

3. Verfahren gemäß einem der Ansprüche 1 oder 2 **dadurch gekennzeichnet, dass** R' eine lineare Alkylgruppe mit 10 bis 15 Kohlenstoffatomen und R" eine lineare Alkylgruppe mit 25 bis 35 Kohlenstoffatomen ist.

4. Verfahren gemäß einem der Ansprüche 1 bis 3 **dadurch gekennzeichnet, dass** Komponente (A) Bienenwachs umfasst.

5. Verfahren gemäß einem der Ansprüche 1 bis 4 **dadurch gekennzeichnet, dass** Komponente (B) wenigstens eine Kieselsäure umfasst.

6. Verfahren gemäß einem der Ansprüche 1 bis 5 **dadurch gekennzeichnet, dass** Komponente (B) wenigstens eine hydrophobe Kieselsäure mit einer Silanolgruppendichte von kleiner 1,8 Silanolgruppen pro nm$^2$, bestimmt mittels Säure-Base-Titration, umfasst.

7. Verfahren gemäß einem der Ansprüche 1 bis 6 **dadurch gekennzeichnet, dass** Komponente (B) zumindest eine hydrophobe Kieselsäure mit einer Methanolzahl von mindestens 30 umfasst, wobei die Methanolzahl dem prozentuale Anteil von Methanol entspricht, welcher einer Wasserphase zugesetzt werden muss, um vollständige Benetzung der Kieselsäure zu erreichen, wobei vollständige Benetzung dabei ein vollständiges Einsinken der Kieselsäure in der Wasser-Methanol-Testflüssigkeit bedeutet.

8. Verfahren gemäß einem der Ansprüche 1 bis 7 **dadurch gekennzeichnet, dass** Komponente (A) in einer Menge von 55 Gew.-% oder mehr bis 99 Gew.-% oder weniger, basierend auf dem Gesamtgewicht des SM (6a), enthalten ist.

9. Verfahren gemäß einem der Ansprüche 1 bis 8 **dadurch gekennzeichnet, dass** Komponente (B) in einer Menge von 1 Gew.-% oder mehr bis 20 Gew.-% oder weniger, basierend auf dem Gesamtgewicht des SM (6a), enthalten ist.

10. Verfahren gemäß einem der Ansprüche 1 bis 9 **dadurch gekennzeichnet, dass** das SM (6a) vom Formkörper (8) durch Lösen oder Emulgieren in einem Lösungsmittel oder mechanisch entfernt wird.

11. Verwendung einer Zusammensetzung enthaltend

(A) wenigstens ein Wachs umfassend wenigstens eine Verbindung der Formel (I):

$$R'\text{-COO-}R'' \qquad (I)$$

wobei R' und R'' gleich oder verschieden sein können und aus gesättigten oder ungesättigten gegebenenfalls substituierten aliphatischen Kohlenwasserstoffgruppen mit 10 bis 36 Kohlenstoffatomen ausgewählt sind,
(B) mindestens ein partikuläres rheologisches Additiv, und
(C) optional weitere Zusatzstoffe

als Stützmaterial in einem Verfahren zum additiven Aufbau von Formkörpern (8),
wobei die Zusammensetzung

- bei einer Temperatur oberhalb der Verfestigungstemperatur Ts des SM (6a) eine strukturviskose, viskoelastische Zusammensetzung ist,
- eine Scherviskosität von höchstens 15 aufweist, gemessen bei einer Temperatur von 10 °C oberhalb der Verfestigungstemperatur Ts des SM (6a), und einer Scherrate von 10 s$^{-1}$, gemessen mit einem Rheometer mit Platte-Platte-Geometrie bei einem Durchmesser von 25 mm und einer Spaltweite von 300 $\mu$m,
- einen Speichermodul G' von mindestens 1 Pa, gemessen auf einem Rheometer mit Platte-Platte-Geometrie, Durchmesser 25 mm und Spaltweite von 300 $\mu$m und bei einer Temperatur von 10 °C oberhalb der Verfestigungstemperatur Ts des SM (6a), und
- eine Verfestigungstemperatur Ts von 40 °C oder mehr bis 80 °C oder weniger aufweist,

wobei

- die Verfestigungstemperatur Ts auf einem Rheometer mit Platte-Platte-Geometrie, Durchmesser 25 mm und Spaltweite von 300 $\mu$m, mittels Temperatursweep unter dynamischer Scherbelastung ermittelt wird, wobei die Probe schrittweise mit einer Abkühlrate von 1,5 K/min von 85 °C auf 20 °C abgekühlt wird und die Probe mit einer konstanten Deformation von 0,1% bei einer konstanten Frequenz von 10 Hz belastet wird, Messpunktsdauer 0,067 min, und
- das Speichermodul G' aus einem dynamischen Deformationsversuch erhalten wurde, bei dem die Probe bei einer konstanten Kreisfrequenz von 10 rad/s mit zunehmender Deformationsamplitude unter Deformationsvorgabe im Deformationsbereich von 0,01 bis 100 belastet wurde, Messpunktsdauer 30 s mit 4 Messpunkten pro Dekade, wobei der Speichermodul G' der Mittelwert der Datenpunkte 2 bis 7 ist, mit der Maßgabe, dass diese im linear-viskoelastischen Bereich liegen.

## Claims

1. Method of additive manufacture of shaped bodies (8) by location-specific deployment of a structure-forming material, (SFM) (6b) wherein,
at the same time or a different time at least one support material, (SM) (6a), is deployed in regions that remain free of SFM (6b),

wherein the SM (6a) is deployed by means of an apparatus having at least one deployment unit (1a) for the SM (6a) which gradually constructs the support structure for the shaped body (8) by location-specific deployment of the SM (6a),
**characterized in that** the SM (6a)

- at a temperature above the solidification temperature Ts of the SM (6a) is a structurally viscous, viscoelastic composition comprising

(A) at least one wax comprising at least one compound of the formula (I):

R'COO-R"                    (I)

where R' and R" may be the same or different and are selected from saturated or unsaturated, optionally substituted aliphatic hydrocarbyl groups having 10 to 36 carbon atoms,
(B) at least one particulate rheological additive, and
(C) optionally further additives,

- has a shear viscosity of not more than 15 Pa·s, measured at a temperature of 10°C above the solidification temperature Ts of the SM (6a), and a shear rate of 10 s$^{-1}$, measured with a rheometer having plate-plate geometry at a diameter of 25 mm and a gap width of 300 $\mu$m,
- has a storage modulus G' of at least 1 Pa, measured on a rheometer having plate-plate geometry, diameter 25 mm and gap width 300 $\mu$m and at a temperature of 10°C above the solidification temperature Ts of the SM (6a), and
- has a solidification temperature Ts of 40°C or more to 80°C or less,

and, on conclusion of the construction of the shaped body (8), the SM (6a) is removed from the shaped body (8),

- wherein the solidification temperature Ts is determined on a rheometer having plate-plate geometry, diameter 25 mm and gap width 300 $\mu$m, by means of a temperature sweep under dynamic shear stress, wherein the sample is cooled stepwise at a cooling rate of 1.5 K/min from 85°C to 20°C and the sample is subjected to a constant deformation of 0.1% at a constant frequency of 10Hz, of measurement point duration of 0.067 min, and
- the storage modulus G' was obtained from a dynamic deformation test in which the sample, at a constant angular frequency of 10 rad/s, was subjected to increasing deformation amplitudes with defined deformation within the deformation range from 0.01 to 100, measurement point duration 30 s with 4 measurement points per decade, wherein the storage modulus G' is the average of data points 2 to 7 with the proviso that they are within the linear-viscoelastic range.

2. Method according to Claim 1, **characterized in that** the deployment unit (1a) can be positioned in x, y and z direction with an accuracy of at least $\pm$ 100 $\mu$m, and hence the location-specific deployment of the SM (6a) is effected either in the x,y working plane or in z direction.

3. Method according to either of Claims 1 and 2, **characterized in that** R' is a linear alkyl group having 10 to 15 carbon atoms and R" is a linear alkyl group having 25 to 35 carbon atoms.

4. Method according to any of Claims 1 to 3, **characterized in that** component (A) comprises beeswax.

5. Method according to any of Claims 1 to 4, **characterized in that** component (B) comprises at least one silica.

6. Method according to any of Claims 1 to 5, **characterized in that** component (B) comprises at least one hydrophobic silica having a silanol group density of less than 1.8 silanol groups per nm$^2$, determined by means of acid-base titration.

7. Method according to any of Claims 1 to 6, **characterized in that** component (B) comprises at least one hydrophobic silica having a methanol value of at least 30, where the methanol value corresponds to the percentage of methanol which has to be added to a water phase in order to achieve complete wetting of the silica, where complete wetting means complete immersion of the silica into the water/methanol test liquid.

8. Method according to any of Claims 1 to 7, **characterized in that** component (A) is present in an amount of 55% by weight or more to 99% by weight or less, based on the total weight of the SM (6a).

9. Method according to any of claims 1 to 8, **characterized in that** component (B) is present in an amount of 1% by weight or more to 20% by weight or less, based on the total weight of the SM (6a).

10. Method according to any of claims 1 to 9, **characterized in that** the SM (6a) is separated from the shaped body (8) by dissolution or emulsification in a solvent or by mechanical means.

11. Use of a composition comprising

   (A) at least one wax comprising at least one compound of the formula (I):

   R'-COO-R''                (I)

   where R' and R'' may be the same or different and are selected from saturated or unsaturated, optionally substituted aliphatic hydrocarbyl groups having 10 to 36 carbon atoms,
   (B) at least one particulate rheological additive, and
   (C) optionally further additives,

   as support material in a method of additive manufacture of shaped bodies (8),
   wherein the composition

   - at a temperature above the solidification temperature Ts of the SM (6a) is a structurally viscous, viscoelastic composition,
   - has a shear viscosity of not more than 15 Pa·s, measured at a temperature of 10°C above the solidification temperature Ts of the SM (6a), and a shear rate of 10 s$^{-1}$, measured with a rheometer having plate-plate geometry at a diameter of 25 mm and a gap width of 300 $\mu$m,
   - has a storage modulus G' of at least 1 Pa, measured on a rheometer having plate-plate geometry, diameter 25 mm and gap width 300 $\mu$m and at a temperature of 10°C above the solidification temperature Ts of the SM (6a), and
   - has a solidification temperature Ts of 40°C or more to 80°C or less,
   - wherein the solidification temperature Ts is determined on a rheometer having plate-plate geometry, diameter 25 mm and gap width 300 $\mu$m, by means of a temperature sweep under dynamic shear stress, wherein the sample is cooled stepwise at a cooling rate of 1.5 K/min from 85°C to 20°C and the sample is subjected to a constant deformation of 0.1% at a constant frequency of 10Hz, of measurement point duration of 0.067 min, and
   - the storage modulus G' was obtained from a dynamic deformation test in which the sample, at a constant angular frequency of 10 rad/s, was subjected to increasing deformation amplitudes with defined deformation within the deformation range from 0.01 to 100, measurement point duration 30 s with 4 measurement points per decade, wherein the storage modulus G' is the average of data points 2 to 7 with the proviso that they are within the linear-viscoelastic range.

**Revendications**

1. Procédé de formation additive de corps moulés (8) par application en des endroits spécifiques d'un matériau structurant, sbM (6b), au moins un matériau support, SM (6a), étant appliqué simultanément ou en décalage temporel dans des zones qui restent exemptes de sbM (6b),
   l'application de SM (6a) ayant lieu par un dispositif qui comprend au moins une unité d'application (1a) pour SM (6a), qui forme successivement la structure support pour le corps moulé (8) par application en des endroits spécifiques de SM (6a),
   **caractérisé en ce que** SM (6a)

   - est une composition viscoélastique à viscosité intrinsèque à une température supérieure à la température de solidification Ts de SM (6a), contenant :

   (A) au moins une cire comprenant au moins un composé de la formule (I) :

   R'-COO-R''                (I)

   dans laquelle R' et R'' peuvent être identiques ou différents, et sont choisis parmi les groupes hydrocarbonés aliphatiques saturés ou insaturés, éventuellement substitués, de 10 à 36 atomes de carbone,
(B) au moins un additif rhéologique particulaire, et
(C) éventuellement des additifs supplémentaires,

- présente une viscosité sous cisaillement d'au plus 15 Pa·s, mesurée à une température de 10 °C au-dessus de la température de solidification Ts de SM (6a), et à un taux de cisaillement de 10 s$^{-1}$, mesuré avec un rhéomètre à géométrie plaque-plaque d'un diamètre de 25 mm avec une largeur de fente de 300 $\mu$m,
- un module de stockage G' d'au moins 1 Pa, mesuré avec un rhéomètre à géométrie plaque-plaque d'un diamètre de 25 mm avec une largeur de fente de 300 $\mu$m, et à une température de 10 °C au-dessus de la température de solidification Ts de SM (6a), et
- une température de solidification Ts de 40 °C ou plus à 80 °C ou moins,

et après la fin de la formation du corps moulé (8), SM (6a) étant éliminé du corps moulé (8),

- la température de solidification Ts étant déterminée avec un rhéomètre à géométrie plaque-plaque d'un diamètre de 25 mm avec une largeur de fente de 300 $\mu$m, par balayage de température sous sollicitation de cisaillement dynamique, l'échantillon étant refroidi graduellement avec un taux de refroidissement de 1,5 K/min de 85 °C à 20 °C, et l'échantillon étant sollicité avec une déformation constante de 0,1 % à une fréquence constante de 10 Hz, avec une durée du point de mesure de 0,067 minute, et
- le module de stockage G' ayant été déterminé par un essai de déformation dynamique, selon lequel l'échantillon a été sollicité par déformation à une fréquence angulaire de 10 rad/s avec une amplitude de déformation croissante dans la plage de déformation allant de 0,01 à 100, avec une durée du point de mesure de 30 secondes et avec 4 points de mesure par décade, le module de stockage G' étant la valeur moyenne des points de données 2 à 7, à condition que ceux-ci se situent dans la plage viscoélastique linéaire.

2. Procédé selon la revendication 1, **caractérisé en ce que** l'unité d'application (1a) peut être positionnée dans les directions x, y et z avec une précision d'au moins $\pm$ 100 $\mu$m, et l'application en des endroits spécifiques de SM (6a) a ainsi lieu aussi bien dans le plan de travail x,y que dans la direction z.

3. Procédé selon l'une quelconque des revendications 1 ou 2, **caractérisé en ce que** R' est un groupe alkyle linéaire de 10 à 15 atomes de carbone, et R" est un groupe alkyle linéaire de 25 à 35 atomes de carbone.

4. Procédé selon l'une quelconque des revendications 1 à 3, **caractérisé en ce que** le composant (A) comprend de la cire d'abeilles.

5. Procédé selon l'une quelconque des revendications 1 à 4, **caractérisé en ce que** le composant (B) comprend au moins une silice.

6. Procédé selon l'une quelconque des revendications 1 à 5, **caractérisé en ce que** le composant (B) comprend au moins une silice hydrophobe ayant une densité de groupes silanol inférieure à 1,8 groupe silanol par nm$^2$, déterminée par titrage acide-base.

7. Procédé selon l'une quelconque des revendications 1 à 6, **caractérisé en ce que** le composant (B) comprend au moins une silice hydrophobe ayant un indice de méthanol d'au moins 30, l'indice de méthanol correspondant à la proportion en pourcentage de méthanol qui doit être ajouté à une phase aqueuse pour atteindre un mouillage complet de la silice, un mouillage complet signifiant un enfoncement complet de la silice dans le liquide d'essai eau-méthanol.

8. Procédé selon l'une quelconque des revendications 1 à 7, **caractérisé en ce que** le composant (A) est contenu en une quantité de 55 % en poids ou plus à 99 % en poids ou moins, par rapport au poids total de SM (6a) .

9. Procédé selon l'une quelconque des revendications 1 à 8, **caractérisé en ce que** le composant (B) est utilisé en une quantité de 1 % en poids ou plus à 20 % en poids ou moins, par rapport au poids total de SM (6a) .

10. Procédé selon l'une quelconque des revendications 1 à 9, **caractérisé en ce que** SM (6a) est éliminé du corps moulé (8) par dissolution ou émulsification dans un solvant ou mécaniquement.

11. Utilisation d'une composition contenant :

(A) au moins une cire comprenant au moins un composé de formule (I) :

$$R'\text{-}COO\text{-}R''\qquad\qquad (I)$$

dans laquelle R' et R'' peuvent être identiques ou différents, et sont choisis parmi les groupes hydrocarbonés aliphatiques saturés ou insaturés, éventuellement substitués, de 10 à 36 atomes de carbone,
(B) au moins un additif rhéologique particulaire, et
(C) éventuellement des additifs supplémentaires,

en tant que matériau support dans un procédé pour la formation additive de corps moulés (8),
la composition

- étant une composition viscoélastique à viscosité intrinsèque à une température supérieure à la température de solidification Ts de SM (6a),
- présentant une viscosité sous cisaillement d'au plus 15 Pa·s, mesurée à une température de 10 °C au-dessus de la température de solidification Ts de SM (6a), et à un taux de cisaillement de 10 s$^{-1}$, mesuré avec un rhéomètre à géométrie plaque-plaque d'un diamètre de 25 mm avec une largeur de fente de 300 $\mu$m,
- un module de stockage G' d'au moins 1 Pa, mesuré avec un rhéomètre à géométrie plaque-plaque d'un diamètre de 25 mm avec une largeur de fente de 300 $\mu$m, et à une température de 10 °C au-dessus de la température de solidification Ts de SM (6a), et
- une température de solidification Ts de 40 °C ou plus à 80 °C ou moins,
- la température de solidification Ts étant déterminée avec un rhéomètre à géométrie plaque-plaque d'un diamètre de 25 mm avec une largeur de fente de 300 $\mu$m, par balayage de température sous sollicitation de cisaillement dynamique, l'échantillon étant refroidi graduellement avec un taux de refroidissement de 1,5 K/min de 85 °C à 20 °C, et l'échantillon étant sollicité avec une déformation constante de 0,1 % à une fréquence constante de 10 Hz, avec une durée du point de mesure de 0,067 minute, et
- le module de stockage G' ayant été déterminé par un essai de déformation dynamique, selon lequel l'échantillon a été sollicité par déformation à une fréquence angulaire de 10 rad/s avec une amplitude de déformation croissante dans la plage de déformation allant de 0,01 à 100, avec une durée du point de mesure de 30 secondes et avec 4 points de mesure par décade, le module de stockage G' étant la valeur moyenne des points de données 2 à 7, à condition que ceux-ci se situent dans la plage viscoélastique linéaire.

Abbildung 1

Abbildung 2

Abbildung 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017020971 A1
- EP 0833237 A2
- WO 2012116047 A1
- US 20050053798 A1
- US 5136515 A
- EP 686676 B1
- EP 1433749 A1
- DE 102013226494 A1

**In der Beschreibung aufgeführte Nicht-Patentliteratur**

- **A. GEBHARDT.** Generative Fertigungsverfahren. Carl Hanser Verlag, 2013
- **G.W. SEARS.** *Anal. Chem.,* 1956, vol. 28, 1981
- **T. G. MEZGER.** The Rheology Handbook. Vincentz Network GmbH & Co. KG, 2006, 147ff
- **G. W. SEARS et al.** *Analytical Chemistry,* 1956, vol. 28, 1981ff